# EUROPEAN PATENT APPLICATION

(11) **EP 4 836 581 A1**
(43) Date of publication of application: **04.11.2026**
(21) Application number: 25744546.0
(22) Date of filing: 20.01.2025
(51) Int. Cl.: H04W 76/19

(54) **DEVICE COMMUNICATION METHOD, RELATED APPARATUS AND COMMUNICATION SYSTEM**

(30) Priority: 26.01.2024 CN 202410117871
(71) Applicant: Huawei Technologies Co., Ltd., Shenzhen, Guangdong 518129 (CN)
(72) Inventor: ZHANG, Tao, Shenzhen, Guangdong 518129 (CN); JIN, Yufeng, Shenzhen, Guangdong 518129 (CN); WEI, Kangming, Shenzhen, Guangdong 518129 (CN); WANG, Jincheng, Shenzhen, Guangdong 518129 (CN); YE, Xiaozhen, Shenzhen, Guangdong 518129 (CN); XU, Bei, Shenzhen, Guangdong 518129 (CN)
(74) Representative: Huawei European IPR
(86) International application number: PCT/CN2025/073387
(87) International publication number: WO 2025/157105

(57) **Abstract**

This application provides a device communication method, a related apparatus, and a communication system. The method may be applied to a communication system including a first device and a second device. The second device may be a wearable device. When a Bluetooth connection between the first device and the second device is disconnected, the first device and the second device may establish, through a relay server, a communication connection for transmitting data based on a modem. The communication connection for transmitting data based on the modem may not be limited by a distance between the first device and the second device. In this way, regardless of whether the first device is close to or far away from the second device, the second device can communicate with the first device, to provide one or more services for a user with the assistance of the first device. This can improve user experience of using the second device.

## Description

This application claims priority to Chinese Patent Application No. 202410117871.5, filed with the China National Intellectual Property Administration on January 26, 2024 and entitled "DEVICE COMMUNICATION METHOD, RELATED APPARATUS, AND COMMUNICATION SYSTEM", which is incorporated herein by reference in its entirety.

### TECHNICAL FIELD

This application relates to the field of terminal technologies, and in particular, to a device communication method, a related apparatus, and a communication system.

### BACKGROUND

With the development of wearable devices such as smartwatches and smart bands, the wearable devices have increasingly powerful functions. Many functions of the wearable device depend on a Bluetooth connection between the wearable device and a mobile phone. When the wearable device is too far away from the mobile phone (for example, the user carries only the wearable device but does not carry the mobile phone when going out), the Bluetooth connection between the wearable device and the mobile phone is disconnected, and consequently many services of the wearable device are temporarily unavailable. This greatly reduces user experience of using the wearable device.

### SUMMARY

This application provides a device communication method, a related apparatus, and a communication system. After a Bluetooth connection between a first device and a second device is disconnected, the first device and the second device may establish, through a relay server, a communication connection for transmitting data based on a modem. The communication connection for transmitting data based on the modem may not be limited by a distance between the first device and the second device. In this way, regardless of whether the first device is close to or far away from the second device, the second device can communicate with the first device, to provide one or more services for a user with the assistance of the first device. This can improve user experience of using the second device.

According to a first aspect, this application provides a device communication method. The method may be applied to a communication system. The communication system may include a first device and a second device, and a Bluetooth connection is established between the first device and the second device. When the Bluetooth connection is disconnected, the first device requests device authentication from a first server, and the second device requests the device authentication from the first server, where the device authentication is used to verify whether the first device and the second device have an association relationship; when the device authentication succeeds, the first device requests channel authentication from the first server, and the second device requests the channel authentication from the first server, where the channel authentication is used to verify whether the first device and the second device have a capability of switching between Bluetooth-based data transmission and modem-based data transmission; when the channel authentication succeeds, the first device and the second device establish a first connection, where the first connection is a communication connection for transmitting data based on a modem; and when the first connection is successfully established, the first device and the second device transmit data via the first connection.

The first server may be a relay server. The first device may be an electronic device like a mobile phone or a tablet computer. The second device may be a wearable device, for example, a watch or a band.

It can be learned that, after the Bluetooth connection is disconnected, the first device and the second device may establish the communication connection for transmitting data based on the modem. The communication connection for transmitting data based on the modem may not be limited by a distance between the first device and the second device. Regardless of whether the first device is close to or far away from the second device, the second device can communicate with the first device, to provide one or more services for a user with the assistance of the first device. For example, when the user goes out with only the second device, the user can still view a message notification of a social application in a timely manner by using the second device, and reply to the message. This can improve user experience of using the second device.

When the communication connection for transmitting data based on the modem is established, the first device and the second device may first perform device authentication and channel authentication through the first server. The device authentication can ensure that the two devices that establish the communication connection for transmitting data based on the modem are associated devices, and avoid that the first device or the second device sends application data to a non-associated device, thereby improving security of application data transmission. The channel authentication can verify whether the two electronic devices have a capability of switching, after a Bluetooth connection is disconnected, from originally transmitting data via the Bluetooth connection to transmitting the data through the modem. This can reduce a case in which an electronic device requests to establish a connection with an electronic device that does not have a data transmission manner switching capability, and reduce a waste of resources such as compute resources and storage resources of the electronic device.

In some embodiments, a device authentication request sent by the first device may include one or more pieces of device information of the first device. A device authentication request sent by the second device may include one or more pieces of device information of the second device. The device authentication may be used only to determine an identity of an electronic device, so that the first server knows existence of the electronic device and device information of the electronic device. When receiving device authentication requests of a plurality of electronic devices, the first server may autonomously verify an association relationship between the plurality of electronic devices, to determine electronic devices having an association relationship. When receiving channel authentication requests of the first device and the second device, the first server may send, to the first device and the second device only after determining that the first device and the second device are associated devices, messages indicating that the channel authentication succeeds.

With reference to the first aspect, in some embodiments, the first connection is a P2P connection.

When the first connection fails to be established, the first device and the second device establish a second connection through the first server, where the second connection includes a data transmission channel between the first device and the first server and a data transmission channel between the second device and the first server; and the first device and the second device transmit data via the second connection.

It may be understood that a network environment in which the first device is located currently and/or a network environment in which the second device is located currently may not support the P2P connection. Therefore, the first device and the second device may not be able to establish the P2P connection. When the P2P connection fails to be established, the first device may establish the data transmission channel with the first server, and the second device may establish the data transmission channel with the first server. In this way, when the Bluetooth connection is disconnected, the first device and the second device may transmit data by using the first server as a data relay station.

With reference to the first aspect, in some embodiments, a specific process in which the first device and the second device establish the first connection may be as follows: The first device establishes a data transmission channel with the first server, and the second device establishes a data transmission channel with the first server, where the first connection includes the data transmission channel between the first device and the first server and the data transmission channel between the second device and the first server.

It can be learned that when the Bluetooth connection is disconnected, the first device and the second device may directly establish a communication connection in which the first server serves as a data relay station.

With reference to the first aspect, in some embodiments, when the first device detects Bluetooth advertising of the second device, and/or the second device detects Bluetooth advertising of the first device, the first device and the second device resume the Bluetooth connection.

Optionally, when the first device and the second device resume the Bluetooth connection, the first device and the second device may disconnect the first connection.

It can be learned that, when the first device and the second device approach each other again after the Bluetooth connection is disconnected, the first device and the second device may resume the Bluetooth connection, switch a data transmission manner, and transmit data to each other via the Bluetooth connection.

With reference to the first aspect, in some embodiments, the first device and the second device each include a first application. When a Bluetooth connection is established between the first device and the second device, the first device sends first data of the first application to the second device via the Bluetooth connection. When a P2P connection is established between the first device and the second device, the first device sends the first data to the second device via the P2P connection. When a data transmission channel is established between the first device and the first server, and a data transmission channel is established between the second device and the first server, the first device sends the first data to the first server and indicates the first server to send the first data to the second device, and the second device receives the first data from the first server.

It can be learned that the first device may determine, based on a current communication connection manner between the first device and the second device, a communication connection manner to be used to transmit data to the second device. When the Bluetooth connection between the first device and the second device is disconnected, the first device can still send application data to the second device via the P2P connection or the communication connection in which the first server serves as a data relay station. Neither the P2P connection nor the communication connection in which the first server serves as a data relay station is limited by a distance between the first device and the second device. Regardless of whether the first device is close to or far away from the second device, the second device can communicate with the first device, to provide one or more services for a user with the assistance of the first device.

In some embodiments, the first data is obtained by the first device from a second server corresponding to the first application before the first device sends the first data to the second device.

With reference to the first aspect, in some embodiments, the first device and the second device each include the first application. When a Bluetooth connection is established between the first device and the second device, the second device sends second data of the first application to the first device via the Bluetooth connection. When a P2P connection is established between the first device and the second device, the second device sends the second data to the first device via the P2P connection. When a data transmission channel is established between the first device and the first server, and a data transmission channel is established between the second device and the first server, the second device sends the second data to the first server and indicates the first server to send the second data to the first device, and the first device receives the second data from the first server.

It can be learned that the second device may determine, based on a current communication connection manner between the second device and the first device, a communication connection manner to be used to transmit data to the first device. When the Bluetooth connection between the first device and the second device is disconnected, the second device can still send application data to the second device via the P2P connection or the communication connection in which the first server serves as a data relay station. Neither the P2P connection nor the communication connection in which the first server serves as a data relay station is limited by a distance between the first device and the second device. Regardless of whether the first device is close to or far away from the second device, the second device can communicate with the first device, to provide one or more services for a user with the assistance of the first device.

In some embodiments, the second data is data determined by the second device based on a user input. For example, the first application is a social application. The second data may include a message that is entered by a user on the second device and that needs to be sent to a contact. For another example, the first application is an audio and video application. The second data may include an audio switching instruction determined based on an operation of switching audio by a user in the second device.

In some embodiments, after receiving the second data, the first device may send the second data to the second server corresponding to the first application.

With reference to the first aspect, in some embodiments, when the device authentication succeeds, the first device receives a first device identifier from the first server, and the second device receives a second device identifier from the first server, where the first device identifier is used to identify the first device, and the second device identifier is used to identify the second device. A message used by the first device to request the channel authentication from the first server includes the first device identifier, and a message used by the second device to request the channel authentication from the first server includes the second device identifier.

With reference to the first aspect, in some embodiments, when the channel authentication succeeds, the first device receives a first channel identifier from the first server and establishes a first signaling link with the first server, and the second device receives a second channel identifier from the first server and establishes a second signaling link with the first server, where the first channel identifier is used to identify the first signaling link, and the second channel identifier is used to identify the second signaling link. The first signaling link and the second signaling link are used by the first device and the second device to establish the first connection.

With reference to the first aspect, in some embodiments, the first device and the second device each include a first service, and the first service is used to invoke a Bluetooth chip or a modem to transmit data. For the first service, refer to a Bluetooth service or a wearable device management service in subsequent embodiments of this application.

According to a second aspect, this application provides a device communication method. The method may be applied to a first device, and a Bluetooth connection is established between the first device and a second device. When the Bluetooth connection is disconnected, the first device requests device authentication from a first server, where the device authentication is used to verify whether the first device and the second device have an association relationship; when the device authentication succeeds, the first device requests channel authentication from the first server, where the channel authentication is used to verify whether the first device has a capability of switching between Bluetooth-based data transmission and modem-based data transmission; when the channel authentication succeeds, the first device establishes a first connection with the second device, where the first connection is a communication connection for transmitting data based on a modem; and when the first connection is successfully established, the first device transmits data with the second device via the first connection.

The first server may be a relay server.

It can be learned that, after the Bluetooth connection is disconnected, the first device and the second device may establish the communication connection for transmitting data based on the modem. The communication connection for transmitting data based on the modem may not be limited by a distance between the first device and the second device. Regardless of whether the first device is close to or far away from the second device, the first device can communicate with the second device, to assist the second device in providing one or more services for a user. For example, when the user goes out with only the second device, the user can still view a message notification of a social application in a timely manner by using the second device, and reply to the message. This can improve user experience of using the second device.

When the communication connection for transmitting data based on the modem is established, the first device may first perform device authentication and channel authentication through the first server. The device authentication can ensure that the two devices that establish the communication connection for transmitting data based on the modem are associated devices, and avoid that the first device sends application data to a non-associated device, thereby improving security of application data transmission. The channel authentication can verify whether the two electronic devices have a capability of switching, after a Bluetooth connection is disconnected, from originally transmitting data via the Bluetooth connection to transmitting the data through the modem. This can reduce a case in which the first device requests to establish a connection with an electronic device that does not have a data transmission manner switching capability, and reduce a waste of resources such as compute resources and storage resources of the first device.

With reference to the second aspect, in some embodiments, the first connection is a P2P connection.

When the first connection fails to be established, the first device establishes a second connection with the second device through the first server, where the second connection includes a data transmission channel between the first device and the first server and a data transmission channel between the second device and the first server; and the first device transmits data with the second device via the second connection.

It may be understood that a network environment in which the first device is located currently and/or a network environment in which the second device is located currently may not support the P2P connection. Therefore, the first device and the second device may not be able to establish the P2P connection. When the P2P connection fails to be established, the first device may establish the data transmission channel with the first server. In this way, when the Bluetooth connection is disconnected, the first device may transmit data to the second device by using the first server as a data relay station.

With reference to the second aspect, in some embodiments, a specific process in which the first device establishes the first connection with the second device may be as follows: The first device establishes the first connection with the second device through the first server, where the first connection includes a data transmission channel between the first device and the first server and a data transmission channel between the second device and the first server.

It can be learned that when the Bluetooth connection is disconnected, the first device and the second device may directly establish a communication connection in which the first server serves as a data relay station.

With reference to the second aspect, in some embodiments, when the first device detects Bluetooth advertising of the second device, the first device resumes the Bluetooth connection with the second device.

Optionally, when the first device and the second device resume the Bluetooth connection, the first device and the second device may disconnect the first connection.

It can be learned that, when the first device and the second device approach each other again after the Bluetooth connection is disconnected, the first device and the second device may resume the Bluetooth connection, switch a data transmission manner, and transmit data to each other via the Bluetooth connection.

With reference to the second aspect, in some embodiments, the first device includes a first application. When a Bluetooth connection is established between the first device and the second device, the first device sends first data of the first application to the second device via the Bluetooth connection. When a P2P connection is established between the first device and the second device, the first device sends the first data to the second device via the P2P connection. When a data transmission channel is established between the first device and the first server, the first device sends the first data to the first server and indicates the first server to send the first data to the second device.

It can be learned that the first device may determine, based on a current communication connection manner between the first device and the second device, a communication connection manner to be used to transmit data to the second device. When the Bluetooth connection between the first device and the second device is disconnected, the first device can still send application data to the second device via the P2P connection or the communication connection in which the first server serves as a data relay station. Neither the P2P connection nor the communication connection in which the first server serves as a data relay station is limited by a distance between the first device and the second device. Regardless of whether the first device is close to or far away from the second device, the second device can communicate with the first device, to provide one or more services for a user with the assistance of the first device.

With reference to the second aspect, in some embodiments, the first device includes the first application. When a Bluetooth connection is established between the first device and the second device, the first device receives second data of the first application from the second device via the Bluetooth connection. When a P2P connection is established between the first device and the second device, the first device receives the second data from the second device via the P2P connection. When a data transmission channel is established between the first device and the first server, the first device receives, from the first server, the second data from the second device.

With reference to the second aspect, in some embodiments, when the device authentication succeeds, the first device receives a first device identifier from the first server, where the first device identifier is used to identify the first device. A message used by the first device to request the channel authentication from the first server includes the first device identifier.

With reference to the second aspect, in some embodiments, when the channel authentication succeeds, the first device receives a first channel identifier from the first server, and establishes a first signaling link with the first server, where the first channel identifier is used to identify the first signaling link. The first signaling link is used by the first device to establish the first connection with the second device.

With reference to the second aspect, in some embodiments, the first device may be a mobile phone. The second device may be a wearable device, for example, a watch or a band. The first data may be obtained by the first device from a second server corresponding to the first application before the first device sends the first data to the second device. The first device sends the second data to the second server corresponding to the first application after receiving the second data.

With reference to the second aspect, in some embodiments, the first device may be a wearable device, for example, a watch or a band. The second device may be a mobile phone. The first data is determined by the first device based on a user input before the first device sends the first data to the second device. For example, the first application is a social application. The first data may include a message that is entered by a user on the first device and that needs to be sent to a contact. For another example, the first application is an audio and video application. The first data may include an audio switching instruction determined based on an operation of switching audio by a user in the first device.

With reference to the second aspect, in some embodiments, the first device includes a first service, and the first service is used to invoke a Bluetooth chip or a modem to transmit data. For the first service, refer to a Bluetooth service or a wearable device management service in subsequent embodiments of this application.

According to a third aspect, this application provides a device communication method. The method may be applied to a server. The server may verify, in response to device authentication requests of a first device and a second device, whether the first device and the second device have an association relationship; when the first device and the second device have an association relationship, the server sends, to the first device and the second device, messages indicating that device authentication succeeds; the server verifies, in response to channel authentication requests of the first device and the second device, whether the first device and the second device have a first capability of switching between Bluetooth-based data transmission and modem-based data transmission; when the first device and the second device have the first capability, the server sends, to the first device and the second device, messages indicating that channel authentication succeeds; and in response to requests of the first device and the second device for establishing a first connection, the server sends a first message to the first device, and sends a second message to the second device, where the first message and the second message are used by the first device and the second device to establish the first connection, and the first connection is a communication connection for transmitting data based on a modem.

The server may be a relay server. The first device may be an electronic device like a mobile phone or a tablet computer. The second device may be a wearable device, for example, a watch or a band.

It can be learned that the server may assist the first device and the second device in establishing the communication connection for transmitting data based on the modem. The communication connection for transmitting data based on the modem may not be limited by a distance between the first device and the second device. After a Bluetooth connection is disconnected, the first device and the second device can still transmit data via the communication connection for transmitting data based on the modem. In this way, regardless of whether the first device is close to or far away from the second device, the second device can communicate with the first device, to provide one or more services for a user with the assistance of the first device.

The server may first perform device authentication and channel authentication on the first device and the second device. The device authentication can ensure that the two devices that establish the communication connection for transmitting data based on the modem are associated devices, and avoid that the first device or the second device sends application data to a non-associated device, thereby improving security of application data transmission. The channel authentication can verify whether the two electronic devices have a capability of switching, after a Bluetooth connection is disconnected, from originally transmitting data via the Bluetooth connection to transmitting the data through the modem. This can reduce a case in which an electronic device requests to establish a connection with an electronic device that does not have a data transmission manner switching capability, and reduce a waste of resources such as compute resources and storage resources of the electronic device.

With reference to the third aspect, in some embodiments, the first connection is a P2P connection, the first message includes an IP address (for example, an external network IP address or an internal network IP address) of the second device, and the second message includes an IP address (for example, an external network IP address or an internal network IP address) of the first device.

Before sending the first message to the first device and sending the second message to the second device, the server may obtain the IP address of the first device and the IP address of the second device. The IP address of the first device may be obtained from a request sent by the first device for establishing the first connection with the second device. The IP address of the second device may be obtained from a request sent by the second device for establishing the first connection with the first device.

It can be learned that the server may provide an address exchange function, to assist the first device and the second device in establishing the P2P connection.

With reference to the third aspect, in some embodiments, the server establishes a first data transmission channel with the first device; and the server establishes a second data transmission channel with the second device, where the first connection includes the first data transmission channel and the second data transmission channel.

With reference to the third aspect, in some embodiments, the server receives, through the first data transmission channel, first data sent by the first device, and sends the first data to the second device through the second data transmission channel.

With reference to the third aspect, in some embodiments, the server receives, through the second data transmission channel, second data sent by the second device, and sends the second data to the first device through the first data transmission channel.

It can be learned that the server may provide a data forwarding function, and can forward the first data of the first device to the second device, and forward the second data of the second device to the first device.

With reference to the third aspect, in some embodiments, the server verifies, in response to device authentication requests of a third device and a fourth device, whether the third device and the fourth device have an association relationship; when the third device and the fourth device have an association relationship, the server sends, to the third device and the fourth device, messages indicating that device authentication succeeds; the server verifies, in response to channel authentication requests of the third device and the fourth device, whether the third device and the fourth device have the first capability; when the third device and the fourth device have the first capability, the server sends, to the third device and the fourth device, messages indicating that channel authentication succeeds; and when a request of the third device for establishing a P2P connection is received, and no request of the fourth device for establishing a P2P connection is received within a first time period, the server sends, to the third device, a message indicating a P2P connection failure, where the first time period includes a time period after the server receives the request of the third device for establishing the P2P connection.

With reference to the third aspect, in some embodiments, after the server sends, to the third device, the message indicating the P2P connection failure, the server may establish a third data transmission channel with the third device; and the server may establish a fourth data transmission channel with the fourth device, where the third data transmission channel and the fourth data transmission channel are used by the third device and the fourth device to transmit data. For a method for establishing the third data transmission channel and the fourth data transmission, refer to the foregoing method for establishing the first data transmission channel and the second data transmission.

With reference to the third aspect, in some embodiments, the message sent by the server to the first device and indicating that the device authentication succeeds includes a first device identifier, the message sent by the server to the second device and indicating that the device authentication succeeds includes a second device identifier, the first device identifier is used to identify the first device, and the second device identifier is used to identify the second device; and the channel authentication request from the first device includes the first device identifier, and the channel authentication request from the second device includes the second device identifier.

With reference to the third aspect, in some embodiments, when the first device and the second device have the first capability, the server sends a first channel identifier to the first device, and sends a second channel identifier to the second device, where the first channel identifier is used to identify a first signaling link, and the second channel identifier is used to identify a second signaling link; and the server establishes the first signaling link with the first device, and establishes the second signaling link with the second device, where the first signaling link and the second signaling link are used by the first device and the second device to establish the first connection.

According to a fourth aspect, this application provides an electronic device. The electronic device may include a memory and a processor. The memory may be configured to store a computer program. The processor may be configured to invoke the computer program, to enable the electronic device to perform the method according to any possible implementation of the second aspect.

According to a fifth aspect, this application provides a communication system. The communication system may include a first device and a second device. A Bluetooth connection is established between the first device and the second device. The first device may be configured to request device authentication from a first server after the Bluetooth connection is disconnected, and the second device may be configured to request the device authentication from the first server after the Bluetooth connection is disconnected. The device authentication is used to verify whether the first device and the second device have an association relationship. The first device may be configured to request channel authentication from the first server after the device authentication succeeds, and the second device may be configured to request the channel authentication from the first server after the device authentication succeeds. The channel authentication is used to verify whether the first device and the second device have a capability of switching between Bluetooth-based data transmission and modem-based data transmission. The first device and the second device may be configured to establish a first connection after the channel authentication succeeds, and the first connection is a communication connection for transmitting data based on a modem. The first device and the second device may be configured to transmit data via the first connection after the first connection is successfully established.

According to a sixth aspect, this application provides a server. The server may include a memory and a processor. The memory may be configured to store a computer program. The processor may be configured to invoke the computer program, to enable the server to perform the method according to any possible implementation of the third aspect.

According to a seventh aspect, this application provides a computer-readable storage medium, including instructions. When the instructions are run on an electronic device, the electronic device is enabled to perform the method according to any possible implementation of the second aspect.

According to an eighth aspect, this application provides a computer program product. The computer program product may include computer instructions. When the computer instructions are run on an electronic device, the electronic device is enabled to perform the method according to any possible implementation of the second aspect.

According to a ninth aspect, this application provides a chip. The chip is used in an electronic device. The chip includes one or more processors. The processor is configured to invoke computer instructions, to enable the electronic device to perform the method according to any possible implementation of the second aspect.

It may be understood that the electronic device provided in the fourth aspect, the communication system provided in the fifth aspect, the server provided in the sixth aspect, the computer-readable storage medium provided in the seventh aspect, the computer program product provided in the eighth aspect, and the chip provided in the ninth aspect are all configured to perform the method provided in embodiments of this application. Therefore, for beneficial effects that can be achieved, refer to the beneficial effects in the corresponding method. Details are not described herein again.

### BRIEF DESCRIPTION OF DRAWINGS

FIG. 1 is a diagram of an architecture of a communication system according to an embodiment of this application;
FIG. 2A is a diagram of a structure of an electronic device 100 according to an embodiment of this application;
FIG. 2B is a diagram of a structure of another electronic device 100 according to an embodiment of this application;
FIG. 3A is a diagram of a structure of an electronic device 200 according to an embodiment of this application;
FIG. 3B is a diagram of a structure of another electronic device 200 according to an embodiment of this application;
FIG. 4 is a diagram of a structure of a relay server 300 according to an embodiment of this application;
FIG. 5 is a diagram of a communication system according to an embodiment of this application;
FIG. 6 is a diagram of another communication system according to an embodiment of this application;
FIG. 7 is a flowchart of a device communication method according to an embodiment of this application;
FIG. 8 is a flowchart of a device communication method according to an embodiment of this application;
FIG. 9 is a flowchart of a method for establishing a communication connection for transmitting data based on a modem according to an embodiment of this application;
FIG. 10 is a flowchart of a P2P connection establishment method according to an embodiment of this application; and
FIG. 11 is a flowchart of another method for establishing a communication connection for transmitting data based on a modem according to an embodiment of this application.

### DESCRIPTION OF EMBODIMENTS

The following describes technical solutions in embodiments of this application with reference to the accompanying drawings in embodiments of this application. In the descriptions of embodiments of this application, terms used in the following embodiments are merely intended to describe specific embodiments, but not to limit this application. As used in the specification and the appended claims of this application, singular expressions "a", "the", "the above", and "this" also aim to include expressions such as "one or more", unless the context explicitly indicates the opposite. It should be further understood that, in the following embodiments of this application, "at least one" and "one or more" mean one or more (including two). The term "and/or" describes an association relationship of associated objects, and indicates that three relationships may exist. For example, A and/or B may indicate the following three cases: Only A exists, both A and B exist, and only B exists. A and B may be singular or plural. The character "/" usually indicates an "or" relationship between the associated objects.

Reference to "an embodiment", "some embodiments", or the like described in this specification means that specific features, structures, or characteristics described with reference to the embodiment are included in one or more embodiments of this application. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "contain", "have", and variations thereof all mean "including but not limited to", unless otherwise specifically emphasized in another manner. The term "connection" includes direct connection and indirect connection, unless otherwise specified. "First" and "second" are merely intended for a purpose of description, and shall not be understood as an indication or implication of relative importance or implicit indication of a quantity of indicated technical features.

In embodiments of this application, words such as "example" or "for example" are used to represent giving examples, illustrations, or descriptions. Any embodiment or design solution described as "example" or "for example" in embodiments of this application should not be construed as being more preferred or advantageous than other embodiments or design solutions. Specifically, the words such as "example" or "for example" are used to present related concepts in a specific manner.

This application provides a device communication method, which may be applied to a communication system including an electronic device 100 and an electronic device 200. The electronic device 200 may be a wearable device, for example, a smartwatch or a smart band. The electronic device 100 may communicate with an application server, and send data from the application server to the electronic device 200. When a Bluetooth connection is established between the electronic device 100 and the electronic device 200, the electronic device 100 and the electronic device 200 may transmit data via the Bluetooth connection. When the Bluetooth connection is disconnected, the electronic device 100 and the electronic device 200 may establish a first connection, and transmit data via the first connection. The first connection may be a communication connection for transmitting data based on a modem. For example, the first connection may be a peer-to-peer (peer-to-peer, P2P) connection. Alternatively, the first connection is a communication connection in which a relay server serves as a data relay station, and may include a data transmission channel between the electronic device 100 and the relay server and a data transmission channel between the electronic device 200 and the relay server.

The communication connection for transmitting data based on the modem (for example, the P2P connection or the communication connection in which the relay server serves as the data relay station) may not be limited by a distance between the electronic device 100 and the electronic device 200. When only the electronic device 100 can communicate with the application server, and a user carries only the electronic device 200, the electronic device 200 can still receive the data from the application server via the P2P connection or the relay server. In this way, regardless of whether the electronic device 100 is close to or far away from the electronic device 200, the user can view a message notification of an application in a timely manner through the electronic device 200, and reply to the message. This can improve user experience of using the electronic device 200.

### The following describes a communication system 10 in this application.

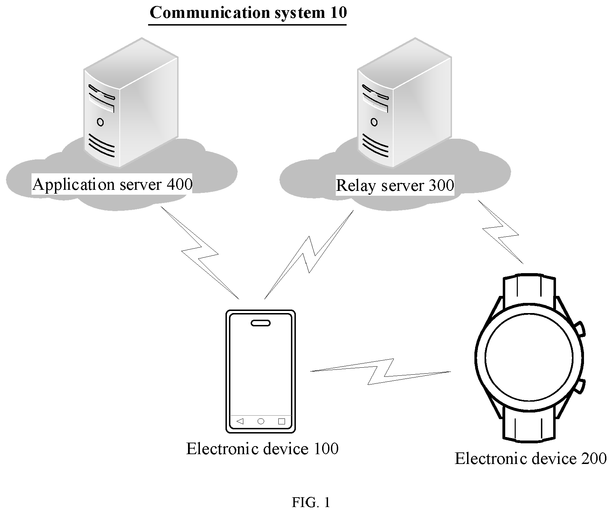

As shown in FIG. 1, the communication system 10 may include an electronic device 100, an electronic device 200, a relay server 300, and an application server 400.

The application server 400 may be an application server of any application. For example, the application server 400 may be an application server of a social application. The application server 400 may store and manage a social account of the social application, and provide a service for social communication between different social accounts. For another example, the application server 400 may alternatively be an application server of an audio and video application. The application server 400 may store audio and video resources, and distribute the audio and video resources to a device of a user.

In some embodiments, an application corresponding to the application server 400 may be installed in the electronic device 100. A communication connection may be established between the electronic device 100 and the application server 400. For example, the application server 400 is for a social application. A social account of the social application is logged in on the electronic device 100. The application server 400 may send, to the electronic device 100, a message that needs to be transferred to the social account logged in on the electronic device 100. After receiving a message entered by a user in the social application, the electronic device 100 may send the message to the application server 400, to indicate the application server 400 to send the message to the corresponding social account.

In some embodiments, when a distance between the electronic device 100 and the electronic device 200 is within a Bluetooth transmission distance range, a Bluetooth connection may be established between the electronic device 100 and the electronic device 200.

When the Bluetooth connection between the electronic device 100 and the electronic device 200 is disconnected, the electronic device 100 and the electronic device 200 may establish a P2P connection through the relay server 300. Alternatively, the electronic device 100 establishes a data transmission channel with the relay server 300, and the electronic device 200 also establishes a data transmission channel with the relay server 300. Further, the relay server 300 may serve as a data relay station. The electronic device 100 and the electronic device 200 may transmit data to each other through the relay server 300.

In some embodiments, the relay server 300 may be a cloud server, or may be a physical server having a physical entity. The relay server 300 may be an independent server, or may be a server cluster including a plurality of servers. An existence form of the relay server 300 is not limited in embodiments of this application. The relay server 300 may be configured to provide functions such as a security authentication function, an address exchange function, and a data forwarding function.

The security authentication function may be used to perform security authentication on the electronic device 100 and the electronic device 200 before the relay server 300 assists the electronic device 100 and the electronic device 200 in establishing the P2P connection or before the relay server 300 serves as the relay station to assist the electronic device 100 and the electronic device 200 in data transmission. The security authentication may include device authentication and channel authentication. The device authentication may be used to verify identities of the electronic device 100 and the electronic device 200, and determine whether the electronic device 100 and the electronic device 200 have an association relationship. That the electronic device 100 and the electronic device 200 have an association relationship may include: A logged-in device account on the electronic device 100 is the same as a logged-in device account on the electronic device 200, another binding relationship is established between the electronic device 100 and the electronic device 200, or the like. The association relationship between the electronic device 100 and the electronic device 200 is not limited in embodiments of this application. The channel authentication may be used to verify whether the electronic device 100 and the electronic device 200 have a capability of switching between Bluetooth transmission and data transmission via a modem. That the electronic device 100 (or the electronic device 200) has a capability of switching between Bluetooth transmission and data transmission via the modem may indicate that the electronic device 100 (or the electronic device 200) can transmit data to a target device via a Bluetooth connection, and when the Bluetooth connection between the electronic device 100 (or the electronic device 200) and the target device is disconnected, the data originally transmitted via the Bluetooth connection continues to be transmitted to the target device via the modem.

Transmitting data via the modem may indicate that during data sending, to-be-sent data is modulated by the modem and then converted by an antenna into an electromagnetic wave for radiation; and during data receiving, a received electromagnetic wave signal is demodulated by the modem. The foregoing communication manner of transmitting data via the modem may include a communication manner based on a mobile communication technology (for example, 2G/3G/4G/5G), a communication manner based on a wireless local area network (wireless local area network, WLAN) (for example, a wireless fidelity (wireless fidelity, Wi-Fi) network), and the like. The foregoing communication manner of transmitting data via the modem is not limited in embodiments of this application.

Not limited to performing device authentication and channel authentication on the electronic device 100 and the electronic device 200, the relay server 300 may further perform device authentication and channel authentication on another device in response to a request of the another device for device authentication and channel authentication.

The address exchange function may be used by the relay server 300 to assist two electronic devices (for example, the electronic device 100 and the electronic device 200) in establishing a P2P connection. When receiving a request for establishing a P2P connection between the electronic device 100 and the electronic device 200, the relay server 300 may obtain an address of the electronic device 100 and an address of the electronic device 200, send the address of the electronic device 100 to the electronic device 200, and send the address of the electronic device 200 to the electronic device 100. In this way, the electronic device 100 and the electronic device 200 can establish the P2P connection based on the addresses of each other, to implement peer-to-peer communication. In some embodiments, the address of the electronic device 100 may include an internet protocol (internet protocol address, IP) address of the electronic device 100, for example, an external network address (or referred to as an external network IP address) of the electronic device 100. Optionally, the address of the electronic device 100 may further include an internal network address (or referred to as an internal network IP address) of the electronic device 100. Similarly, the address of the electronic device 200 may include an IP address of the electronic device 200, for example, an external network address of the electronic device 200. Optionally, the address of the electronic device 200 may further include an internal network address of the electronic device 200.

The data forwarding function may be used by the relay server 300 to serve as a data relay station of two electronic devices (for example, the electronic device 100 and the electronic device 200), to forward data of one of the electronic devices to the other electronic device. When providing the data forwarding function, the relay server 300 may establish a data transmission channel with each of the two electronic devices. The relay server 300 may forward data through the data transmission channels between the relay server 300 and the two electronic devices.

In some embodiments, the application corresponding to the application server 400 may also be installed in the electronic device 200. For example, the application corresponding to the application server 400 is a first application. The electronic device 200 may be bound to an application account logged in to the first application in the electronic device 100. A method for binding the application account is not limited in embodiments of this application. For example, the electronic device 200 may be bound, by scanning a QR code by the electronic device 100, the application account logged in to the first application in the electronic device 100.

When receiving data from the application server 400, the electronic device 100 may send the data to the electronic device 200. When the electronic device 200 receives data entered by the user in the application corresponding to the application server 400, the electronic device 200 may send the data to the electronic device 100. Then, the electronic device 100 may send, to the application server 400, the data sent by the electronic device 200. It can be learned that the electronic device 200 may communicate with the application server 400 through the electronic device 100.

For example, the electronic device 100 is a mobile phone. The electronic device 200 is a watch. A social application may be installed on both the mobile phone and the watch. The mobile phone may communicate with the application server 400 of the social application, and log in to a corresponding social account. The watch may be bound, by using the mobile phone, to the social account logged in to the social application in the mobile phone. When the mobile phone receives a message from the application server 400, the mobile phone may send the data to the watch. In addition, the user may reply to the message in the social application on the watch. The watch may send, to the mobile phone, a reply message entered by the user, and the mobile phone sends the reply message to the application server 400. In this way, the user can quickly view and reply to the message in the social application on the watch without starting the mobile phone.

In some embodiments, a device type of the electronic device 100 is different from that of the electronic device 200. Although the application corresponding to the application server 400 is installed in both the electronic device 100 and the electronic device 200, application installation packages (for example, Android^{®} packages (Android Package, APK)) of the application in the electronic device 100 and the electronic device 200 may be different. The application installation package may also be referred to as a name like application package.

Not limited to the electronic devices and the servers in FIG. 1, the communication system 10 may alternatively include more or fewer devices.

The following describes a structure of a device in this application.

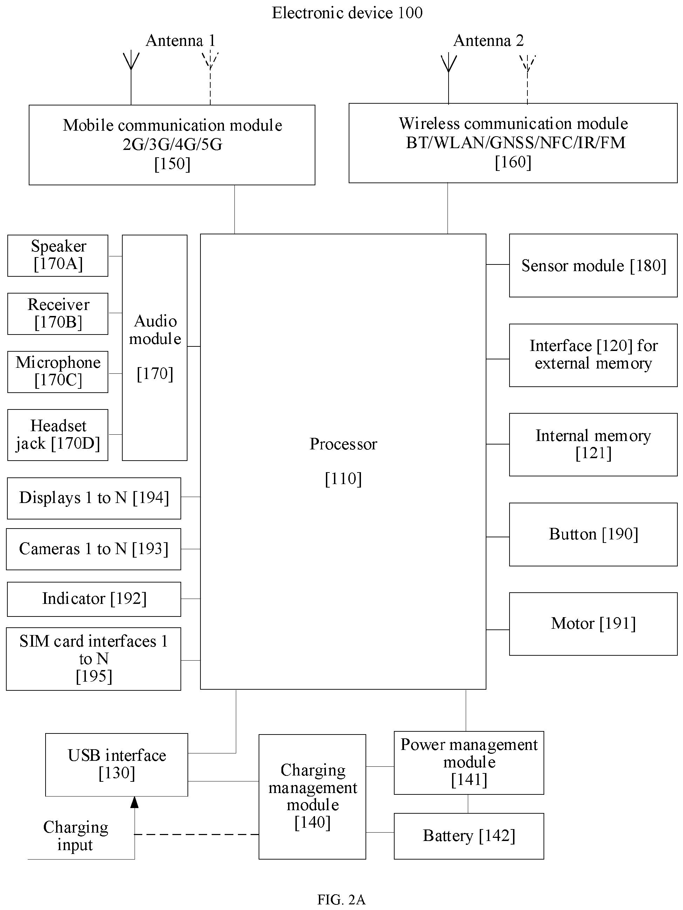

### FIG. 2A is an example diagram of a structure of an electronic device 100.

As shown in FIG. 2A, the electronic device 100 may include a processor 110, an interface 120 for external memory, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like.

It may be understood that the structure shown in this embodiment of this application does not constitute a specific limitation on the electronic device 100. In some other embodiments of this application, the electronic device 100 may include more or fewer components than those shown in the figure, or combine some components, or split some components, or have different component arrangements. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent components, or may be integrated into one or more processors. In some embodiments, the processor 110 may be a system on chip (system on chip, SOC).

The controller may be a nerve center and a command center of the electronic device 100. The controller may generate an operation control signal based on instruction operation code and a time sequence signal, to complete control of instruction fetching and instruction execution.

A memory may be further disposed in the processor 110, to store instructions and data. In some examples, the memory in the processor 110 is a cache. The memory may store instructions or data just used or cyclically used by the processor 110. If the processor 110 needs to use the instructions or data again, the instructions or data may be directly invoked from the memory. This avoids repeated access, and reduces waiting time of the processor 110, so that system efficiency is improved.

In this application, the memory may store a computer program, so that the controller or the processor implements a device communication method in this application through an interface or by using a protocol. For example, the computer program stored in the memory may be used to: establish a Bluetooth connection to another device, detect whether the Bluetooth connection is disconnected, establish a P2P connection to the another device or connect to the another device through a relay server 300 after the Bluetooth connection to the another device is disconnected, determine a current connection manner between the electronic device and the another device to perform data transmission with the another device in the current connection manner, and the like.

The USB interface 130 is an interface conforming to a USB standard specification, and may be specifically a mini USB interface, a micro USB interface, a USB Type-C interface, or the like. The USB interface 130 may be configured to connect to a charger to charge the electronic device 100, or may be configured to transmit data between the electronic device 100 and a peripheral device, or may be configured to connect to a headset to play audio by using the headset.

The charging management module 140 is configured to receive charging input from a charger. The charger may be a wireless charger, or may be a wired charger. When charging the battery 142, the charging management module 140 may further supply power to the electronic device through the power management module 141.

The power management module 141 is configured to connect the battery 142, the charging management module 140, and the processor 110. The power management module 141 receives input from the battery 142 and/or the charging management module 140, and supplies power to the processor 110, the internal memory 121, the external memory, the display 194, the camera 193, the wireless communication module 160, and the like.

A wireless communication function of the electronic device 100 may be implemented by using the antenna 1, the antenna 2, the mobile communication module 150, the wireless communication module 160, the modem processor, the baseband processor, and the like.

The antenna 1 and the antenna 2 are configured to transmit and receive electromagnetic wave signals. Each antenna in the electronic device 100 may be configured to cover one or more communication bands. Different antennas may be reused to improve antenna utilization. For example, the antenna 1 may be reused as a diversity antenna of a wireless local area network. In some other embodiments, the antenna may be used in combination with a tuning switch.

The mobile communication module 150 may provide a solution for wireless communication, including 2G/3G/4G/5G and the like, that is applied to the electronic device 100. The mobile communication module 150 may include at least one filter, a switch, a power amplifier, a low noise amplifier (low noise amplifier, LNA), and the like. The mobile communication module 150 may receive an electromagnetic wave by using the antenna 1, perform processing such as filtering and amplification on the received electromagnetic wave, and send a processed electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules of the mobile communication module 150 may be disposed in the processor 110. In some embodiments, at least some functional modules of the mobile communication module 150 may be disposed in a same component as at least some modules of the processor 110.

The modem processor may include a modulator and a demodulator. The modulator is configured to adjust a to-be-sent low-frequency baseband signal to a medium/high-frequency signal. The demodulator is configured to demodulate a received electromagnetic wave signal into a low-frequency baseband signal. Then, the demodulator transmits the low-frequency baseband signal obtained through demodulation to the baseband processor for processing. After being processed by the baseband processor, the low-frequency baseband signal is transmitted to the application processor. The application processor outputs a sound signal by using an audio device (which is not limited to the speaker 170A, the receiver 170B, or the like), or displays an image or a video by using the display 194. In some embodiments, the modem processor may be an independent component. In some other embodiments, the modem processor may be independent of the processor 110 and disposed in a same component as the mobile communication module 150 or another functional module (for example, the wireless communication module 160). The modem processor may also be referred to as a modem (modem).

The wireless communication module 160 may provide a solution for wireless communication that is applied to the electronic device 100 and that includes a WLAN (such as a Wi-Fi network or a P2P network), Bluetooth (Bluetooth, BT), a global navigation satellite system (global navigation satellite system, GNSS), frequency modulation (frequency modulation, FM), near field communication (near field communication, NFC), an infrared (infrared, IR) technology, and the like. The wireless communication module 160 may be one or more components that integrate at least one communication processing module. The wireless communication module 160 receives an electromagnetic wave through the antenna 2, performs frequency modulation and filtering on an electromagnetic wave signal, and sends a processed signal to the processor 110. The wireless communication module 160 may further receive a to-be-sent signal from the processor 110, perform frequency modulation and amplification on the to-be-sent signal, and convert the to-be-sent signal into an electromagnetic wave for radiation through the antenna 2.

In some embodiments, in the electronic device 100, the antenna 1 is coupled to the mobile communication module 150, and the antenna 2 is coupled to the wireless communication module 160, so that the electronic device 100 can communicate with a network and another device according to a wireless communication technology.

The electronic device 100 implements a display function by using the GPU, the display 194, the application processor, and the like. The GPU is a microprocessor for image processing, and is connected to the display 194 and the application processor. The GPU is configured to perform mathematical and geometric calculation and render graphics.

The display 194 is configured to display an image, a video, and the like. In some embodiments, the electronic device 100 may include one or N displays 194, where N is a positive integer greater than 1.

The electronic device 100 may implement a photographing function by using the ISP, the camera 193, the video codec, the GPU, the display 194, the application processor, and the like.

The ISP is configured to process data fed back by the camera 193. For example, during photographing, a shutter is pressed, light is transmitted to a photosensitive element of the camera through a lens, an optical signal is converted into an electrical signal, and the photosensitive element of the camera transmits the electrical signal to the ISP for processing, to convert the electrical signal into a visible image.

The camera 193 is configured to capture a still image or a video. In some embodiments, the electronic device 100 may include one or N cameras 193, where N is a positive integer greater than 1.

The digital signal processor is configured to process a digital signal. In addition to processing a digital image signal, the digital signal processor may further process another digital signal. For example, when the electronic device 100 selects a frequency, the digital signal processor is configured to perform Fourier transform or the like on frequency energy.

The NPU is a neural-network (neural-network, NN) computing processor that processes input information rapidly by referring to a structure of a biological neural network, for example, by referring to a transmission mode between human brain neurons, and can further perform self-learning continuously. The NPU may be used to implement applications such as intelligent cognition of the electronic device 100, for example, image recognition, facial recognition, voice recognition, and text understanding.

The interface 120 for external memory may be configured to connect to an external memory card, such as a micro SD card, to extend a storage capability of the electronic device 100. The external memory card communicates with the processor 110 through the interface 120 for external memory, to implement a data storage function. For example, files such as music or videos are stored in the external memory card.

The internal memory 121 may be configured to store computer executable program code, where the executable program code includes instructions. The processor 110 performs various function applications and data processing of the electronic device 100 by running the instructions stored in the internal memory 121. The internal memory 121 may include a program storage area and a data storage area. The program storage area may store an operating system, an application program required by at least one function (for example, a sound play function or an image play function), and the like. The data storage area may store data (such as audio data or a phone book) created in a use process of the electronic device 100. In addition, the internal memory 121 may include a high-speed random access memory, and may further include a non-volatile memory, such as at least one magnetic disk storage component, a flash memory component, and a universal flash storage (universal flash storage, UFS).

The electronic device 100 may implement an audio function, such as music playing and recording, by using the audio module 170, the speaker 170A, the receiver 170B, the microphone 170C, the headset jack 170D, the application processor, and the like.

The audio module 170 is configured to convert digital audio information into an analog audio signal for output, and is also configured to convert analog audio input into a digital audio signal. The audio module 170 may be further configured to encode and decode audio signals. In some examples, the audio module 170 may be disposed in the processor 110, or some functional modules of the audio module 170 may be disposed in the processor 110. The speaker 170A, also referred to as a "loudspeaker", is configured to convert an audio electrical signal into a sound signal. The receiver 170B, also referred to as an "earpiece", is configured to convert an audio electrical signal into a sound signal. The microphone 170C, also referred to as a "mike" or a "mic", is configured to convert a sound signal into an electrical signal. The headset jack 170D is configured to connect to a wired headset.

The sensor module 180 may include a pressure sensor, a gyroscope sensor, a barometric pressure sensor, a magnetic sensor, an acceleration sensor, a gravity sensor, a distance sensor, an optical proximity sensor, a fingerprint sensor, a temperature sensor, a touch sensor, an ambient light sensor, a bone conduction sensor, and the like.

The button 190 includes a power button, a volume button, and the like. The motor 191 may generate a vibration prompt. The indicator 192 may be an indicator light, and may indicate a charging status or a power change, or may indicate a message, a missed call, a notification, or the like.

The SIM card interface 195 is configured to connect to a SIM card. The SIM card may be inserted into the SIM card interface 195 or pulled out of the SIM card interface 195, to implement contact with or separation from the electronic device 100. The electronic device 100 may support one or N SIM card interfaces, and N is a positive integer greater than 1. The electronic device 100 interacts with a network by using a SIM card, to implement functions such as conversation and data communication. In some examples, the electronic device 100 uses an eSIM, namely, an embedded SIM card. The eSIM card may be embedded in the electronic device 100, and cannot be separated from the electronic device 100.

A software system of the electronic device 100 may use a layered architecture, an event-driven architecture, a microkernel architecture, a micro-service architecture, or a cloud architecture. In this embodiment of this application, an Android^{®} system with a layered architecture is used as an example to describe the software structure of the electronic device 100.

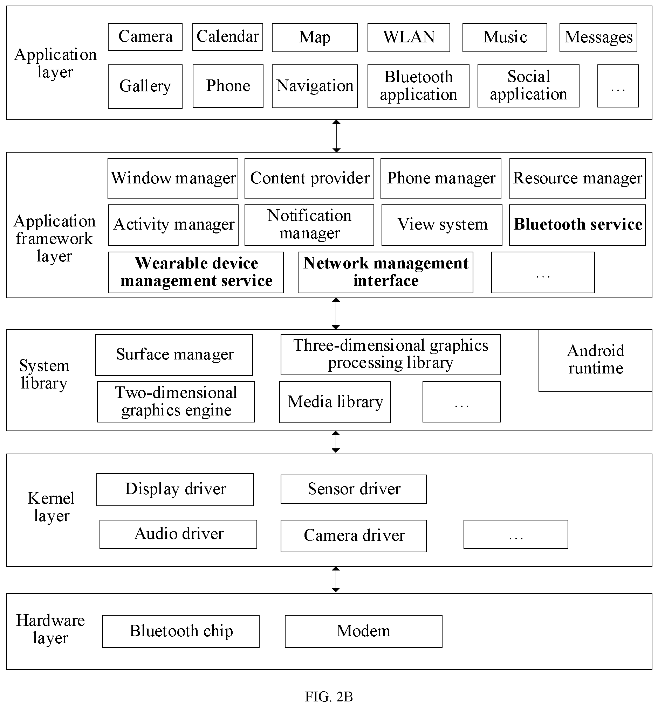

### FIG. 2B is an example diagram of a structure of another electronic device 100.

In the layered architecture, software is divided into several layers, and each layer has a clear role and task. The layers communicate with each other through a software interface. In some embodiments, the Android^{®} system is divided into four layers: an application layer, an application framework layer, an Android runtime (Android Runtime) and system library, and a kernel layer from top to bottom. In addition to software, the electronic device 100 further includes a hardware apparatus. The hardware apparatus in the electronic device 100 may be classified onto a hardware layer. The electronic device 100 may drive the hardware apparatus at the hardware layer through software, to implement a corresponding function.

The hardware layer may include hardware apparatuses such as a Bluetooth chip and a modem. The Bluetooth chip may be configured to send and receive Bluetooth signals. The modem may be configured to modulate a to-be-sent signal, and demodulate a received signal. For the modem, refer to the description of the embodiment in FIG. 2A.

The application layer may include a series of application packages.

As shown in FIG. 2B, the application packages may include applications such as Camera, Gallery, Calendar, Phone, Map, Navigation, WLAN, a Bluetooth application, Music, Messages, and a social application. The Bluetooth application may be configured to provide a function of enabling or disabling Bluetooth, and a function of establishing a Bluetooth connection to or disconnecting a Bluetooth connection from another device. The social application may be configured to provide services such as social communication (for example, sending an SMS message, making a voice call/video call, receiving a voice call/video call, and sharing content).

The application framework layer provides an API and a programming framework for applications at the application layer. The application framework layer includes some predefined functions.

As shown in FIG. 2B, the application framework layer may include a window manager, a content provider, a view system, a phone manager, a resource manager, a notification manager, an activity manager, a Bluetooth service, a wearable device management service, a network management interface, and the like.

The window manager is configured to manage window programs. The window manager may obtain a display size, determine whether there is a status bar, lock a screen, take a screenshot, and the like.

The content provider is configured to store and obtain data and make the data accessible to the application. The data may include videos, images, audio, calls that are made and received, browsing history and bookmarks, a phone book, and the like.

The view system includes visual controls, such as a text display control and a picture display control. The view system may be configured to construct an application. A display interface may include one or more views. For example, a display interface including an SMS notification icon may include a text display view and a picture display view.

The phone manager is configured to provide a communication function of the electronic device 100, for example, call status management (including accepting and declining).

The resource manager provides various resources for the application, such as a localized string, an icon, a picture, a layout file, and a video file.

The notification manager enables the application to display notification information in a status bar (for example, a drop-down notification bar), and may be configured to transfer a message of a notification type. The information may automatically disappear after a short stay without user interaction. For example, the notification manager is configured to notify a download completion, a message reminder, and the like. The notification manager may alternatively be a notification that appears in a form of a graph or a scroll bar text in a status bar at the top of the system, for example, a notification of an application running in the background, or may be a notification that appears in a form of a dialog window on a screen. For example, the status bar shows text information, an alert tone is made, the electronic device vibrates, or an indicator blinks.

The activity manager is responsible for managing activities (activity), and is responsible for starting, switching, and scheduling components in a system, managing and scheduling applications, and the like. The activity manager can be invoked by an upper-layer application to start a corresponding activity.

The Android runtime includes a core library and a virtual machine. The Android runtime is responsible for scheduling and management of the Android system.

The Bluetooth service may be configured to provide a data transmission interface for an application (for example, the Bluetooth application or the social application) at the application layer, so that the application transmits application data to the Bluetooth service.

The Bluetooth service may be further configured to invoke the Bluetooth chip, to establish a Bluetooth connection between the electronic device 100 and another device (for example, the electronic device 200). The Bluetooth service may send application data to the Bluetooth chip, to send the application data to another device via the Bluetooth connection.

The network management interface (network socket) may be configured to provide a function of invoking the modem. The network management interface may also be referred to as a name like network interface.

In some embodiments, the Bluetooth service may invoke the modem through the network management interface, to send application data to another device through the modem.

In some embodiments, the Bluetooth service may further detect in real time whether a Bluetooth connection between the electronic device 100 and another device is disconnected. If the Bluetooth connection is disconnected, the Bluetooth service may indicate the mobile communication module or the wireless communication module (refer to the diagram of the structure of the electronic device 100 shown in FIG. 2A) in the electronic device 100 to establish a modem-based communication connection with the another device, for example, a P2P connection, or a connection in which the relay server 300 serves as a data relay station.

The Bluetooth service may receive application data of an application at the application layer. The Bluetooth service may determine a communication connection manner between the electronic device 100 and a target device of the application data. The target device of the application data may be an electronic device that needs to receive the application data. If a Bluetooth connection is established between the electronic device 100 and the target device of the application data, the Bluetooth service may transmit the application data to the Bluetooth chip, to send the application data to the target device via the Bluetooth connection. If a modem-based communication connection is established between the electronic device 100 and the target device of the application data, the Bluetooth service may transmit the application data to the modem through the network management interface, to send the application data to the target device via the modem-based communication connection.

The wearable device management service may be configured to provide a data transmission interface for an application (for example, the social application) at the application layer, so that the application transmits application data to the wearable device management service. The wearable device management service may invoke the Bluetooth chip, to send the application data to another device through the Bluetooth chip. The wearable device management service may alternatively invoke the modem through the network management interface, to send the application data to another device through the modem. Same as the Bluetooth service, the wearable device management service determines whether to transmit the application data from the application at the application layer through the Bluetooth chip or the modem. For details, refer to the foregoing description of the Bluetooth service. Details are not described herein. The wearable device management service may also be referred to as a name like wearable device engine (Wear Engine).

The Bluetooth service and the wearable device management service provide different data transmission interfaces. This can facilitate selection of different applications at the application layer. For example, the data transmission interface provided by the Bluetooth service may be a native interface of an Android^{®} system, and may be used by one or more applications for which the data transmission interface is not updated. The one or more applications may not need to be adaptively modified for the solution of this application. The data transmission interface provided by the wearable device management service may be a new interface different from the native interface of the Android^{®} system. After adapting to the new interface, the one or more applications may transmit application data to the wearable device management service through the new interface.

In some embodiments, the electronic device 100 may include one of the Bluetooth service and the wearable device management service, or include both the Bluetooth service and the wearable device management service.

In some embodiments, the Bluetooth service and the wearable device management service may be included in a service, for example, a service A, at the application framework layer. The service A may provide a data transmission interface for an application at the application layer. The application at the application layer may send application data to the service A based on the data transmission interface provided by the service A. The Bluetooth service may invoke the Bluetooth chip. The wearable device management service may invoke the modem through the network management interface. Optionally, the network management interface and the wearable device management service may be combined into one module. The service A may determine a communication connection manner between the electronic device 100 and a target device of the application data. If a Bluetooth connection is established between the electronic device 100 and the target device of the application data, the service A may transmit the application data to the Bluetooth chip through the Bluetooth service, to send the application data to the target device via the Bluetooth connection. If a modem-based communication connection is established between the electronic device 100 and the target device of the application data, the service A may transmit the application data to the modem through the wearable device management service and the network management interface, to send the application data to the target device via the modem-based communication connection.

In some embodiments, the Bluetooth service may include the wearable device management service. That the Bluetooth service invokes the modem through the network management interface may be completed by the wearable device management service in the Bluetooth service.

Alternatively, the wearable device management service may include the Bluetooth service. A relationship between the Bluetooth service and the wearable device management service is not limited in embodiments of this application.

The core library includes two parts: a function that needs to be invoked by using the Java language, and a core library of Android.

The application layer and the application framework layer run in the virtual machine. The virtual machine executes a binary file of a Java file at the application layer and the application framework layer. The virtual machine is configured to perform functions such as object lifecycle management, stack management, thread management, security and abnormity management, and garbage collection.

The system library may include a plurality of functional modules, for example, a surface manager (surface manager), a media library (Media Libraries), a three-dimensional graphics processing library (for example, OpenGL ES), and a two-dimensional graphics engine (for example, SGL).

The surface manager is configured to manage a display subsystem and provide fusion of 2D and 3D layers for a plurality of applications.

The media library supports playback and recording in a plurality of commonly used audio and video formats, and static image files. The media library may support a plurality of audio and video coding formats, such as MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

The structure shown in FIG. 2B does not constitute a limitation on the electronic device 100. The electronic device 100 may include more or fewer modules than those shown in FIG. 2B, or combine some modules, or split some modules, or have different module arrangements.

The electronic device 100 shown in FIG. 2A and FIG. 2B may be a mobile phone, a tablet computer, a notebook computer, an ultra-mobile personal computer (ultra-mobile personal computer, UMPC), a netbook, a personal digital assistant (personal digital assistant, PDA), or the like. A specific type of the electronic device 100 is not limited in embodiments of this application.

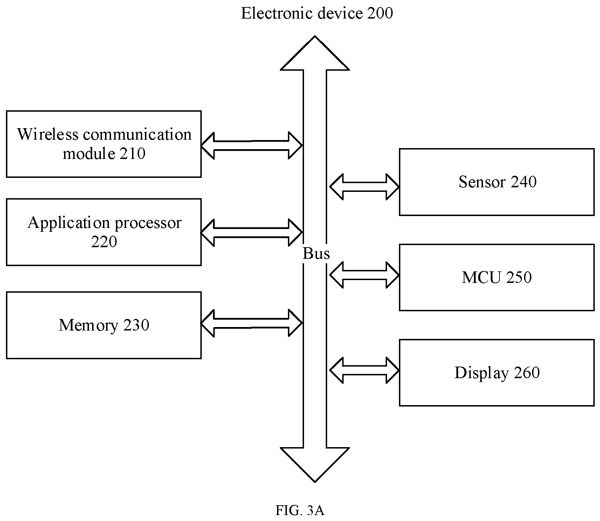

### FIG. 3A is an example diagram of a structure of an electronic device 200.

As shown in FIG. 3A, the electronic device 200 may include a wireless communication module 210, an application processor 220, a memory 230, a sensor 240, a microprocessor (microcontroller unit, MCU) 250, a display 260, and the like. These components may be coupled through a bus.

The application processor 220 may also be referred to as a main processor. The application processor 220 may be a processor having a strong processing capability and rich storage and peripheral resources. For example, the application processor 220 may be a system on chip (SOC) integrated with a plurality of processors.

The application processor 220 may include one or more interfaces, for example, an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (GPIO) interface, a subscriber identity module (subscriber identity module, SIM) interface, and/or a universal serial bus (universal serial bus, USB) interface.

The application processor 220 may be further connected to the memory 230. The memory 230 may include a program storage area and a user data storage area. The program storage area may store an operating system and one or more applications (such as a camera application and a phone application), and the data storage area may store data (such as photos and contacts) created by a user in a process of using the electronic device 200. The memory 230 may be a high-speed random access memory, or may be a non-volatile memory, for example, a magnetic disk, a flash memory, or a universal flash storage (universal flash storage, UFS). Alternatively, the memory 230 may be an external storage card, for example, a micro SD card.

The MCU 250 may include a reduced-specification central processing unit (central processing unit, CPU), and a necessary memory and peripheral, for example, a read-only memory (read-only memory, ROM), a random access memory (read access memory, RAM), a pseudo-static random access memory (pseudo-static read access memory, PSRAM), a general-purpose input/output (GPIO) interface, a serial port, and a timer. The MCU 250 may also be connected to the memory 230, to store applications and user data running on the MCU 250. The MCU 250 may serve as a coprocessor of the application processor 220, to assist the application processor 220 in completing processing work that cannot be executed by the application processor 220 or has low execution efficiency, for example, signal transmission between devices, access device management, Bluetooth communication management, and audio processing, thereby reducing a burden of the application processor 220, reducing power consumption, and improving a battery life of the device.

For example, when the electronic device 200 is in a low-power mode, the application processor 220 enters a sleep mode to reduce power consumption. In this case, the MCU 250 may monitor whether a touch signal arrives at a touch-sensitive sensor disposed on the display 260. The touch signal may be generated due to a touch operation of the user. If a touch signal arrives, the MCU 250 may wake up the application processor 220 to turn on the display 260.

The application processor 220 and the MCU 250 may run different tasks independently relative to each other, and may be isolated from each other and run different operating systems or bare-metal programs. For example, a Linux operating system runs on the application processor 220, and a lightweight operating system like a real-time operating system (RTOS) runs on the MCU 250. The two may communicate with each other through a bus, a shared memory, or the like. In some embodiments, although different systems run on the application processor 220 and the MCU 250, the application processor 220 may serve as a main core to control normal operating of the entire device. For example, the Linux operating system running on the application processor 220 may be loaded with an MCU driver, to control work of the MCU 250.

The electronic device 200 may implement complex display through the application processor 220 and the display 260, for example, real-time refresh of a game application interface, display of a preview picture of a camera application, and interface update following a touch operation of the user. The electronic device 200 may further implement simple display through the MCU 250 and the display 260, for example, display of only current time in a low-power mode. The display 260 may be configured to display an image, a video, and the like. The display 260 may be a liquid crystal display (liquid crystal display, LCD), an organic light-emitting diode (organic light-emitting diode, OLED) display, an active-matrix organic light-emitting diode (active-matrix organic light-emitting diode, AMOLED) display, a flexible light-emitting diode (flexible light-emitting diode, FLED) display, a quantum dot light-emitting diode (quantum dot light-emitting diode, QLED) display, or the like.

The wireless communication module 210 may include a mobile communication module of 2G/3G/4G/5G or the like, a Wi-Fi communication module, a P2P communication module, a Bluetooth communication module, a GNSS communication module, an FM communication module, an NFC communication module, an IR communication module, and the like. The wireless communication module 210 may alternatively be a communication component integrating a plurality of communication processing modules. The wireless communication module 210 receives an electromagnetic wave through an antenna, performs frequency modulation and filtering on an electromagnetic wave signal, and sends a processed signal to the application processor 220 or the MCU 250. The wireless communication module 210 may further receive a to-be-sent signal from the application processor 220 or the MCU 250, perform frequency modulation and amplification on the to-be-sent signal, and convert the to-be-sent signal into an electromagnetic wave for radiation through the antenna.

Received signals of the 2G/3G/4G/5G mobile communication module, the Wi-Fi communication module, and the P2P communication module need to be demodulated into low-frequency baseband signals through a modem and then transmitted to a baseband processor for processing. The low-frequency baseband signals are processed by the baseband processor and then transmitted to the application processor 220. The application processor 220 outputs a sound through an audio device (which is not limited to a speaker, a receiver, or the like), or displays an image or a video through the display. To-be-sent signals of the 2G/3G/4G/5G mobile communication module, the Wi-Fi communication module, and the P2P communication module need to be modulated into medium/high-frequency signals by the modem and then transmitted through the antenna.

The sensor 240 may include a gyroscope sensor, an acceleration sensor, a pressure sensor, an optical proximity sensor, an ambient light sensor, a temperature sensor, a distance sensor, the touch-sensitive sensor disposed on the display 260, and the like.

The structure shown in FIG. 3A does not constitute a limitation on the electronic device 200. The electronic device 200 may include more or fewer components than those shown in FIG. 3A, or combine some components, or split some components, or have different component arrangements. The components shown in FIG. 3A may be implemented by hardware, software, or a combination of software and hardware.

For example, not limited to the two processors shown in FIG. 3A, the electronic device 200 may alternatively have only one processor. Optionally, the one processor in the electronic device 200 may be a dual-core processor. For example, the one processor may include two processing units. Among the two processing units, one processor unit may serve as a main processing unit, and the other processing unit may serve as a co-processing unit. When the electronic device 200 is in a low-power mode, the main processing unit in the electronic device 200 may be in a sleep state, to reduce power consumption.

A software system of the electronic device 200 may use a layered architecture, an event-driven architecture, a microkernel architecture, a micro-service architecture, or a cloud architecture. In this embodiment of this application, an Android^{®} system with a layered architecture is used as an example to describe the software structure of the electronic device 200.

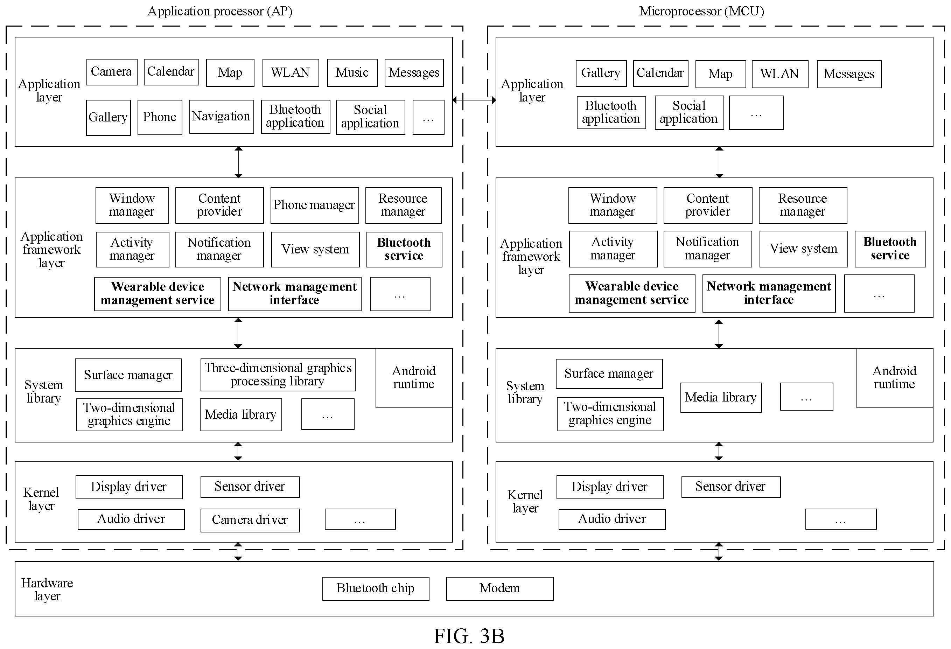

### FIG. 3B is an example diagram of a structure of another electronic device 200.

In the layered architecture, software is divided into several layers, and each layer has a clear role and task. The layers communicate with each other through a software interface. In some embodiments, the Android^{®} system is divided into four layers: an application layer, an application framework layer, an Android runtime (Android Runtime) and system library, and a kernel layer from top to bottom.

The electronic device 200 includes two processors: an application processor (AP) and a microprocessor (MCU). It can be learned from the structure shown in FIG. 3A that the AP and the MCU may be isolated from each other, and each can run an operating system independently. Based on the layered architecture, an operating system running on the AP may include an application layer, an application framework layer, an Android runtime and system library, and a kernel layer, and an operating system running on the MCU may also include an application layer, an application framework layer, an Android runtime and system library, and a kernel layer.

For the layers of the operating system running on the AP, refer to the foregoing description in FIG. 2B.

The MCU serves as a coprocessor of the AP, and content included at the layers of the operating system running on the MCU may be less than that on the AP.

For example, applications included in the application layer of the MCU may be fewer than applications included in the application layer of the AP. For example, the application layer of the MCU may include applications such as Gallery, Calendar, Map, WLAN, Messages, a Bluetooth application, and a social application, but does not include applications such as Camera, Music, Phone, and Navigation. Modules included in the application framework layer of the MCU may be fewer than modules included in the application framework layer of the AP. For example, the application framework layer of the MCU may include a window manager, a content provider, a resource manager, an activity manager, a view system, a Bluetooth service, a wearable device management service, and a network management interface, but does not include a phone manager. Modules included in the system library of the MCU may be fewer than modules included in the system library of the AP. For example, the system library of the MCU may include a surface manager, a two-dimensional graphics engine, and a media library, but does not include a three-dimensional graphics processing library. Modules included in the kernel layer of the MCU may be fewer than modules included in the kernel layer of the AP. For example, the kernel layer of the MCU may include a display driver, a sensor driver, and an audio driver, but does not include a camera driver.

The foregoing content included in the MCU is merely an example description in this application, but shall not constitute a limitation on this application. The operating system running on the MCU may alternatively include more or less content.

In some embodiments, one or more applications in the electronic device 200 may run on only the AP, or may run on only the MCU, or can run on both the AP and the MCU. In other words, the application layer of the AP may include an application that does not exist at the application layer of the MCU. The application layer of the MCU may also include an application that does not exist at the application layer of the AP. The application layer of the AP and the application layer of the MCU may further include one or more same applications.

For content included in the operating system running on the MCU, refer to the foregoing description in FIG. 2B. Details are not described herein.

In addition to the foregoing software programs in the AP and the MCU, the electronic device 200 further includes a hardware apparatus. The hardware apparatus in the electronic device 200 may be classified onto a hardware layer. In the electronic device 200, the AP may drive the hardware apparatus at the hardware layer through a software program running on the AP, and the MCU may drive the hardware apparatus at the hardware layer through a software program running on the MCU.

The hardware layer may include hardware apparatuses such as a Bluetooth chip and a modem. The Bluetooth chip may be configured to send and receive Bluetooth signals. The modem may be configured to modulate a to-be-sent signal, and demodulate a received signal. For the modem, refer to the description of the embodiment in FIG. 2A.

The structure shown in FIG. 3B does not constitute a limitation on the electronic device 200. The electronic device 200 may include more or fewer modules than those shown in FIG. 3B, or combine some modules, or split some modules, or have different module arrangements.

In some embodiments, the application layer of the AP may communicate with the application layer of the MCU. For example, when the electronic device 200 is in a low-power mode, the AP in the electronic device 200 is in a sleep state. In this case, if the electronic device 200 receives data sent by an electronic device 100, the MCU in the electronic device 200 may first process the received data, and then determine whether the AP needs to be woken up. If the data is transmitted via a Bluetooth connection, the Bluetooth chip at the hardware layer in the electronic device 200 may receive the data, and send the data to the Bluetooth service or the wearable device management service at the application framework layer in the MCU. If the data is transmitted via a modem-based communication connection, the modem at the hardware layer in the electronic device 200 may receive the data, and send the data to the Bluetooth service or the wearable device management service through the network management interface in the MCU. Further, the Bluetooth service or the wearable device management service in the MCU may transmit the data to a corresponding application at the application layer.

The MCU may determine whether the MCU can independently process the data from the electronic device 100. If the MCU cannot independently process the data, the MCU may wake up the AP, and send the data to the AP for processing. For example, the data from the electronic device 100 is a message of a social application. After receiving the message, the electronic device 200 needs to display a turned-on screen to display a message notification. In this case, after the message is transmitted to the application framework layer of the MCU through the hardware layer, and then to the social application at the application layer of the MCU, the social application in the MCU may send the message to the social application in the AP. After the AP is woken up, the social application in the AP may invoke corresponding modules at the application framework layer, the system library, and the kernel layer in the AP based on the message, to turn on the screen of the electronic device 200 to display a message notification of the social application.

In some embodiments, the application framework layer of the AP may communicate with the application framework layer of the MCU. When the electronic device 200 receives, in a sleep mode, data from the electronic device 100, the MCU in the electronic device 200 may determine whether the MCU can independently process the data. If the MCU cannot independently process the data, the MCU may wake up the AP, and send the data to the AP for processing. For example, when the data is transmitted to the application framework layer in the MCU through the hardware layer, the Bluetooth service or the wearable device management service in the MCU may send the data to the application framework layer in the AP (for example, the Bluetooth service or the wearable device management service in the AP). After the AP is woken up, the application framework layer in the AP may transmit the data to a corresponding application at the application layer in the AP.

In some embodiments, when a Bluetooth connection is established between the electronic device 100 and the electronic device 200, and the electronic device 200 is in the sleep mode, the MCU in the electronic device 200 may detect in real time whether the Bluetooth connection is disconnected. When detecting that the Bluetooth connection is disconnected, the MCU in the electronic device 200 may establish a P2P connection with the electronic device 100 or establish a data transmission channel with a relay server 300 to implement a communication connection between the electronic device 200 and the electronic device 100. Alternatively, when detecting that the Bluetooth connection is disconnected, the MCU in the electronic device 200 may wake up the AP, and the electronic device 200 may establish a P2P connection with the electronic device 100 by using the AP or establish a data transmission channel with the relay server 300 to implement a communication connection between the electronic device 200 and the electronic device 100.

If the MCU in the electronic device 200 can run a corresponding program, so that the electronic device 200 establishes a P2P connection with the electronic device 100 or establishes a data transmission channel with the relay server 300, the Bluetooth service or the wearable device management service in the MCU may send a Bluetooth connection disconnection message to an application (for example, a Bluetooth application or a social application) at the application layer in the MCU, and invoke the modem through the network management interface in the MCU to establish the P2P connection with the electronic device 100 or establish the data transmission channel with the relay server 300.

If the MCU in the electronic device 200 needs to wake up the AP, and the AP runs a corresponding program to enable the electronic device 200 to establish a P2P connection with the electronic device 100 or establish a data transmission channel with the relay server 300, the Bluetooth service (or the wearable device management service) in the MCU may send a Bluetooth connection disconnection message to the Bluetooth service (or the wearable device management service) in the AP. The Bluetooth service (or the wearable device management service) in the AP may send the Bluetooth connection disconnection message to an application at the application layer in the AP, and invoke the modem through the network management interface in the AP to establish a P2P connection with the electronic device 100 or establish a data transmission channel with the relay server 300.

Communication between the application layers and communication between the application framework layers in the AP and the MCU are merely example descriptions in this application, but shall not constitute a limitation on this application.

The electronic device 200 shown in FIG. 3A and FIG. 3B may be a wearable device like a smartwatch or a smart band, an internet of things (internet of things, IoT) device, or the like. A specific type of the electronic device 200 is not limited in embodiments of this application.

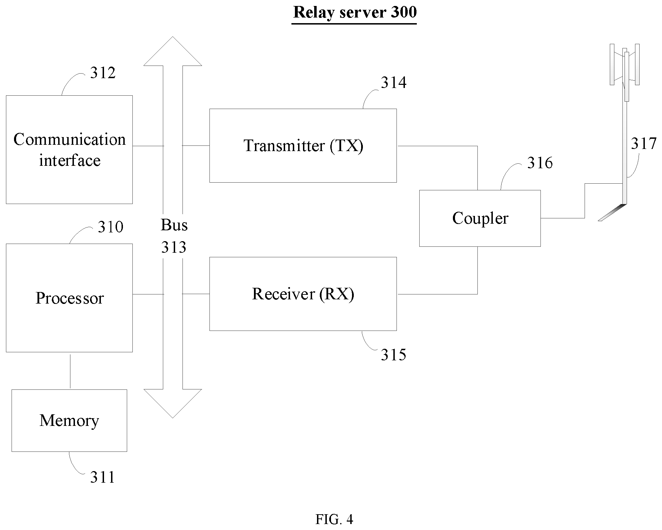

### FIG. 4 is an example diagram of a structure of a relay server 300.

As shown in FIG. 4, the relay server 300 may include one or more processors 310, a memory 311, a communication interface 312, a transmitter 314, a receiver 315, a coupler 316, and an antenna 317. These components may be connected to each other through a bus 313 or in another manner. FIG. 4 is described by using an example in which the components are connected through the bus.

The communication interface 312 may be used by the relay server 300 to communicate with another electronic device, for example, the electronic device 100 or the electronic device 200 shown in FIG. 1. Specifically, the communication interface 312 may be a 3G communication interface, a long term evolution (LTE) (4G) communication interface, a 5G communication interface, a WLAN communication interface, a WAN communication interface, or the like. Not limited to a wireless communication interface, the relay server 300 may be further configured with a wired communication interface 312 to support wired communication.

In some embodiments of this application, the transmitter 314 and the receiver 315 may be considered as a wireless modem. The transmitter 314 may be configured to perform transmission processing on a signal output by the processor 310. The receiver 315 may be configured to receive a signal. In the relay server 300, there may be one or more transmitters 314 and one or more receivers 315. The antenna 317 may be configured to convert electromagnetic energy in a transmission line into an electromagnetic wave in free space, or convert an electromagnetic wave in free space into electromagnetic energy in a transmission line. The coupler 316 may be configured to divide a mobile communication signal into a plurality of channels of signals, and allocate the plurality of channels of signals to a plurality of receivers 315. It may be understood that the antenna 317 in the relay server 300 may be implemented as a large-scale antenna array.

The memory 311 is coupled to the processor 310, and is configured to store various software programs and/or a plurality of groups of instructions. Specifically, the memory 311 may include a high-speed random access memory, and may also include a non-volatile memory, such as one or more magnetic disk storage devices, a flash memory device, or another non-volatile solid-state storage device.

The memory 311 may store an operating system (briefly referred to as a system below), for example, an embedded operating system like uCOS^{®}, VxWorks^{®}, or RTLinux^{®}. The memory 311 may further store a network communication program, and the network communication program may be used to communicate with one or more electronic devices (for example, the electronic device 100).

In embodiments of this application, the memory 311 may be configured to store device information (such as device account information and a device identifier) of an electronic device that requests security authentication (such as device authentication and channel authentication) from the relay server 300, and an address (such as an IP address) of an electronic device that requests the relay server 300 for establishing a P2P connection with another device.

Optionally, when the relay server 300 serves as a data relay station for data transmission between the electronic device 100 and the electronic device 200, the memory 311 may store data to be sent by the electronic device 100 to the electronic device 200 and data to be sent by the electronic device 200 to the electronic device 100.

In embodiments of this application, the processor 310 may be configured to read and execute computer-readable instructions. Specifically, the processor 310 may be configured to invoke a program stored in the memory 311, and execute instructions included in the program. The program may be, for example, an implementation program for performing device authentication, an implementation program for performing channel authentication, an implementation program for performing address exchange, or an implementation program for performing data relay provided in one or more embodiments of this application.

It should be noted that the relay server 300 shown in FIG. 4 is merely an implementation in embodiments of this application. In actual application, the relay server 300 may alternatively include more or fewer components. This is not limited herein.

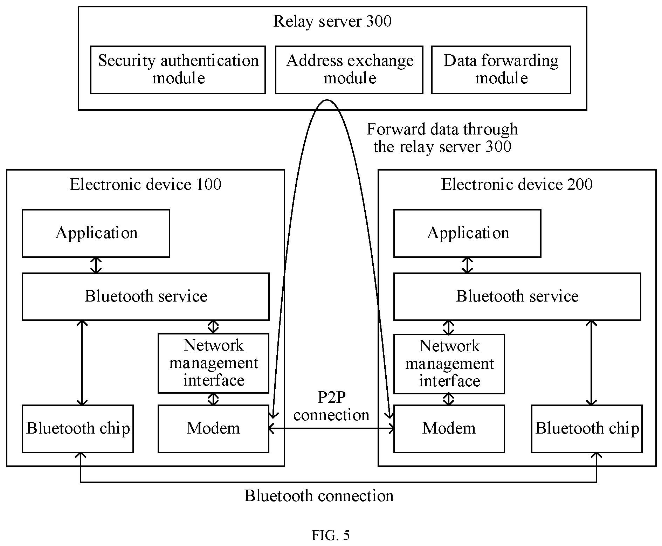

### FIG. 5 is an example diagram of a communication system according to this application.

As shown in FIG. 5, the communication system may include an electronic device 100, an electronic device 200, and a relay server 300.

The relay server 300 may include a security authentication module, an address exchange module, and a data forwarding module. The security authentication module may be configured to provide a security authentication function. The address exchange module may be configured to provide an address exchange function. The data forwarding function may be configured to provide a data forwarding function. For the security authentication function, the address exchange function, and the data forwarding function, refer to the descriptions in the foregoing embodiments. Details are not described herein.

The electronic device 100 may include an application, a Bluetooth service, a network management interface, a Bluetooth chip, and a modem. The electronic device 200 may also include an application, a Bluetooth service, a network management interface, a Bluetooth chip, and a modem. For details, refer to the foregoing descriptions of FIG. 2B and FIG. 3B.

In some embodiments, the application in the electronic device 200 shown in FIG. 5 may be an application on an AP, or may be an application on an MCU. The Bluetooth service and the network management interface in the electronic device 200 shown in FIG. 5 may belong to an application framework layer in the AP, or may belong to an application framework layer in the MCU.

In some embodiments, when a distance between the electronic device 100 and the electronic device 200 is within a Bluetooth transmission distance range, the electronic device 100 and the electronic device 200 may establish a Bluetooth connection. When a Bluetooth connection is established between the electronic device 100 and the electronic device 200, the application in the electronic device 100 may send application data to the Bluetooth service. The Bluetooth service in the electronic device 100 may send the application data to the Bluetooth chip. The Bluetooth chip in the electronic device 100 may send the application data to the electronic device 200 via the Bluetooth connection. The Bluetooth chip in the electronic device 200 may receive the application data from the electronic device 100, and send the application data to the Bluetooth service. The Bluetooth service in the electronic device 200 may send the application data to a corresponding application.

When the Bluetooth connection between the electronic device 100 and the electronic device 200 is disconnected, and a P2P connection is established between the electronic device 100 and the electronic device 200, the electronic device 100 and the electronic device 200 may transmit data via the P2P connection. The application in the electronic device 100 can still send the application data to the Bluetooth service. The Bluetooth service in the electronic device 100 may send the application data to the modem through the network management interface. The modem in the electronic device 100 may modulate the application data, and send modulated application data to the electronic device 200 via the P2P connection. The modem in the electronic device 200 may receive the application data from the electronic device 100, demodulate the application data, and send demodulated application data to the Bluetooth service through the network management interface. Then, the Bluetooth service in the electronic device 200 may send the application data to the corresponding application.

When the Bluetooth connection between the electronic device 100 and the electronic device 200 is disconnected, a data transmission channel is established between the electronic device 100 and the relay server 300, and a data transmission channel is also established between the electronic device 200 and the relay server 300, the electronic device 100 and the electronic device 200 may transmit data through the relay server 300. After receiving the application data of the application, the Bluetooth service in the electronic device 100 may send the application data to the modem through the network management interface. The modem in the electronic device 100 may send the application data to the relay server 300 through the data transmission channel between the electronic device 100 and the relay server 300. The data forwarding module in the relay server 300 may send the application data from the electronic device 100 to the electronic device 200 through the data transmission channel between the electronic device 200 and the relay server 300. The modem in the electronic device 200 may receive the application data forwarded by the relay server 300, and send the application data to the Bluetooth service through the network management interface. Then, the Bluetooth service in the electronic device 200 may send the application data to the corresponding application.

Similarly, when the electronic device 200 needs to send data to the electronic device 100, the electronic device 200 may send the data to the electronic device 100 via the Bluetooth connection, the P2P connection, or the relay server 300. For a specific process, refer to the foregoing process in which the electronic device 100 sends data to the electronic device 200.

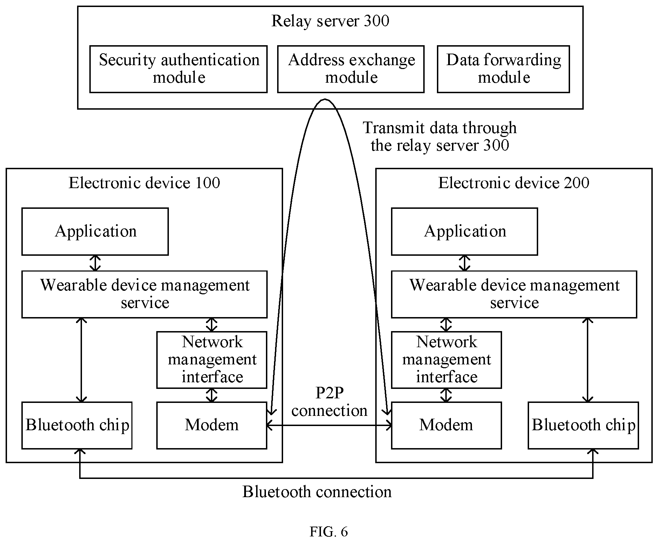

### FIG. 6 is an example diagram of another communication system according to this application.

As shown in FIG. 6, the communication system may include an electronic device 100, an electronic device 200, and a relay server 300. For the electronic device 100, the electronic device 200, and the relay server 300, refer to the descriptions in FIG. 5. Different from those in FIG. 5, the electronic device 100 and the electronic device 200 each include a wearable device management service. The electronic device 100 may send application data of the application to the Bluetooth chip or the modem through the wearable device management service, and the Bluetooth chip or the modem sends the application data to the electronic device 200. The electronic device 200 may also send application data of the application to the Bluetooth chip or the modem through the wearable device management service, and the Bluetooth chip or the modem sends the application data to the electronic device 100. For a specific data transmission process, refer to the foregoing process of performing data transmission based on the Bluetooth service in FIG. 5. Details are not described herein.

In some embodiments, the application in the electronic device 200 shown in FIG. 6 may be an application on an AP, or may be an application on an MCU. The wearable device management service and the network management interface in the electronic device 200 shown in FIG. 6 may belong to an application framework layer in the AP, or may belong to an application framework layer in the MCU.

In some embodiments, a data transmission interface provided by the Bluetooth service for the application may be a native interface of an operating system (for example, an Android^{®} system) in the electronic device 100 or the electronic device 200. The application may not need to be adaptively modified for the solution of this application. A data transmission interface provided by the wearable device management service for the application may be a new interface different from the foregoing native interface. After adapting to the new interface, the application may transmit application data to the wearable device management service, and then the wearable device management service sends the application data to another device.

It can be learned from the communication systems shown in FIG. 5 and FIG. 6 that upper-layer applications in the electronic device 100 and the electronic device 200 may not need to sense an actual transmission manner of application data. After the application sends the application data to the Bluetooth service or the wearable device management service, the Bluetooth service or the wearable device management service may determine the transmission manner of the application data based on a current connection manner between the electronic device 100 and the electronic device 200.

It should be noted that, not limited to processing performed by the Bluetooth service or the wearable device management service on the application data, processing performed by the Bluetooth chip on the application data, and processing performed by the modem on the application data shown in FIG. 5 and FIG. 6, the application data may further experience more processing in a process in which the application data is transmitted from the application in the electronic device 100 to the application in the electronic device 200 (or transmitted from the application in the electronic device 200 to the application in the electronic device 100).

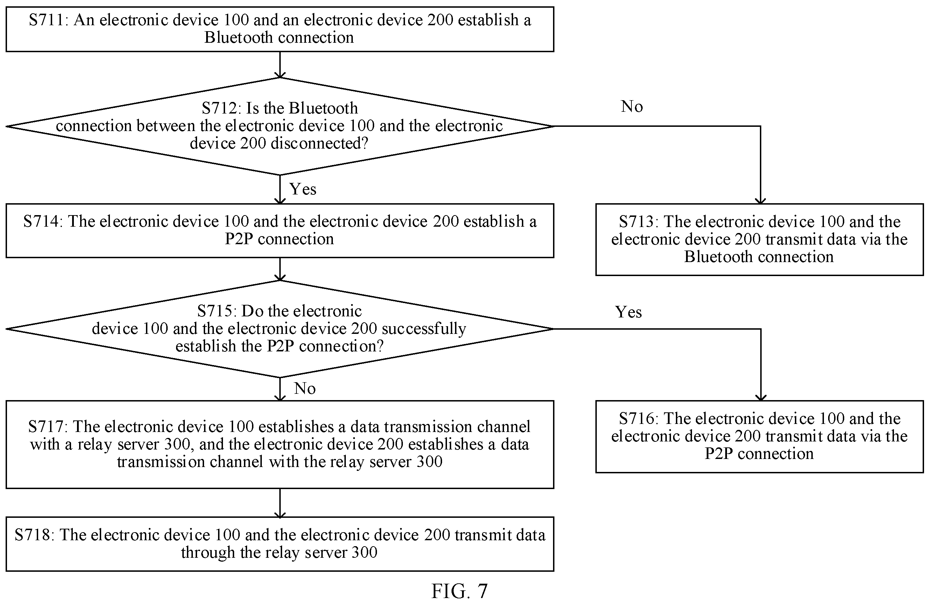

### FIG. 7 is an example flowchart of a device communication method according to this application.

As shown in FIG. 7, the method may include steps S711 to S718.

S711: An electronic device 100 and an electronic device 200 establish a Bluetooth connection.

S712: Detect whether the Bluetooth connection between the electronic device 100 and the electronic device 200 is disconnected.

In some embodiments, when the Bluetooth connection is established between the electronic device 100 and the electronic device 200, to maintain the Bluetooth connection, the electronic device 100 and the electronic device 200 may send Bluetooth heartbeat packets to each other at intervals of a period of time. The Bluetooth heartbeat packets may be used to maintain validity of the Bluetooth connection. When the electronic device 100 receives no Bluetooth heartbeat packet from the electronic device 200 within a preset time period, the electronic device 100 may determine that the Bluetooth connection between the electronic device 100 and the electronic device 200 is disconnected. When the electronic device 200 receives no Bluetooth heartbeat packet from the electronic device 100 within a preset time period, the electronic device 200 may determine that the Bluetooth connection between the electronic device 100 and the electronic device 200 is disconnected.

In addition to detecting, by using the Bluetooth heartbeat packets, whether the Bluetooth connection is disconnected, the electronic device 100 and the electronic device 200 may alternatively detect, according to another method, whether the Bluetooth connection is disconnected. This is not limited in embodiments of this application.

S713: The electronic device 100 and the electronic device 200 transmit data via the Bluetooth connection.

If the Bluetooth connection is maintained between the electronic device 100 and the electronic device 200 (that is, the Bluetooth connection is not disconnected), the electronic device 100 may send data to the electronic device 200 via the Bluetooth connection, and the electronic device 200 may send data to the electronic device 100 via the Bluetooth connection.

S714: The electronic device 100 and the electronic device 200 establish a P2P connection.

If the Bluetooth connection between the electronic device 100 and the electronic device 200 is disconnected, the electronic device 100 and the electronic device 200 may attempt to establish the P2P connection.

In some embodiments, the electronic device 100 and the electronic device 200 may establish the P2P connection with the assistance of a relay server 300. A process in which the electronic device 100 and the electronic device 200 establish the P2P connection is specifically described in subsequent embodiments. Details are not described herein.

S715: Detect whether the electronic device 100 and the electronic device 200 successfully establish the P2P connection.

In some embodiments, both network environments in which the electronic device 100 and the electronic device 200 are located support the P2P connection. The electronic device 100 and the electronic device 200 can successfully establish the P2P connection. If a network environment in which either of the electronic device 100 and the electronic device 200 is located does not support the P2P connection or neither of network environments in which the electronic device 100 and the electronic device 200 are located supports the P2P connection, the electronic device 100 and the electronic device 200 cannot successfully establish the P2P connection. For example, if an address translation (network address translation, NAT) gateway of the electronic device 200 does not support a P2P protocol, the electronic device 200 cannot establish a P2P connection with another device.

Therefore, the electronic device 100 and/or the electronic device 200 may detect whether the P2P connection between the electronic device 100 and the electronic device 200 is successfully established.

S716: The electronic device 100 and the electronic device 200 transmit data via the P2P connection.

If the electronic device 100 and the electronic device 200 successfully establish the P2P connection, the electronic device 100 may send data to the electronic device 200 via the P2P connection, and the electronic device 200 may send data to the electronic device 100 via the P2P connection.

S717: The electronic device 100 establishes a data transmission channel with the relay server 300, and the electronic device 200 establishes a data transmission channel with the relay server 300.

If the electronic device 100 and the electronic device 200 fail to establish the P2P connection, the electronic device 100 may establish the data transmission channel with the relay server 300, and the electronic device 200 may establish the data transmission channel with the relay server 300. The data transmission channel between the electronic device 100 and the relay server 300 may be used to transmit application data between the electronic device 100 and the relay server 300. The data transmission channel between the electronic device 200 and the relay server 300 may be used to transmit application data between the electronic device 200 and the relay server 300. For example, the application data may include but is not limited to application data of a social application (for example, a message of a contact), application data of an audio and video application (for example, audio fluctuation data and video fluctuation data), and the like.

S718: The electronic device 100 and the electronic device 200 transmit data through the relay server 300.

When the data transmission channel is established between the electronic device 100 and the relay server 300, and the data transmission channel is established between the electronic device 200 and the relay server 300, the electronic device 100 and the electronic device 200 may transmit data through the relay server 300.

Steps S714 and S715 are optional. In some embodiments, when the Bluetooth connection between the electronic device 100 and the electronic device 200 is disconnected, the electronic device 100 and the electronic device 200 may directly perform step S717.

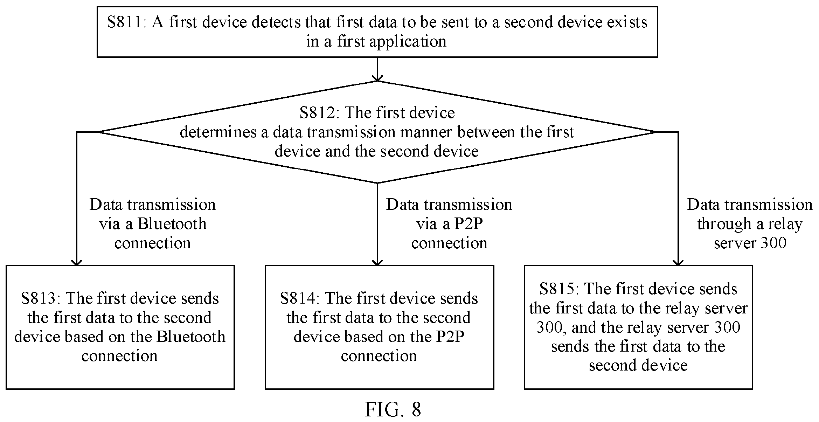

### FIG. 8 is an example flowchart of a device communication method according to this application.

As shown in FIG. 8, the method may include steps S811 to S815.

S811: A first device detects that first data to be sent to a second device exists in a first application.

S812: The first device determines a data transmission manner between the first device and the second device.

The first application may be installed in the first device. When detecting the first data to be sent to the second device in the first application, the first device may determine the data transmission manner between the first device and the second device.

If a Bluetooth connection is established between the first device and the second device, the data transmission manner between the first device and the second device is a manner of transmitting data via the Bluetooth connection. The electronic device 100 may perform the following step S813.

If a P2P connection is established between the first device and the second device, the data transmission method between the first device and the second device is a manner of transmitting data via the P2P connection. The electronic device 100 may perform the following step S814.

If a data transmission channel is established between the first device and a relay server 300, the data transmission manner between the first device and the second device is a manner of transmitting data through the relay server 300. The electronic device 100 may perform the following step S815.

S813: The first device sends the first data to the second device based on the Bluetooth connection.

S814: The first device sends the first data to the second device based on the P2P connection.

S815: The first device sends the first data to the relay server 300, and the relay server 300 sends the first data to the second device.

In some embodiments, the first device may be the electronic device 100 (for example, a mobile phone) shown in FIG. 1. The second device may be the electronic device 200 (for example, a watch or a band) shown in FIG. 1. The first data may be obtained by the first device from an application server of the first application. For example, the first application is a social application. The first data may include a message sent by a contact of a social account logged in to the first application on the first device to the social account. For another example, the first application is an audio and video application. The first data may include audio play data and/or video play data.

In some embodiments, the first device may be the electronic device 200 shown in FIG. 1. The second device may be the electronic device 100 shown in FIG. 1. The first data may be determined by the first device based on a user input. For example, the first application is a social application. The first data may include a message that is entered by a user on the first device and that needs to be sent to a contact. For another example, the first application is an audio and video application. The first data may include an audio switching instruction determined based on an operation of switching audio by a user in the first device.

The first device may include the Bluetooth service and/or the wearable device management service shown in FIG. 2B. Step S811 and step S812 may be performed by the Bluetooth service or the wearable device management service in the first device.

It can be learned from the methods shown in FIG. 7 and FIG. 8 that, if the Bluetooth connection between the electronic device 100 and the electronic device 200 is disconnected, the electronic device 100 and the electronic device 200 may further establish the communication connection for transmitting data based on the modem, for example, a P2P connection, or a communication connection in which the relay server 300 serves as a data relay station. The communication connection for transmitting data based on the modem may not be limited by a distance between the electronic device 100 and the electronic device 200. Regardless of whether the electronic device 100 is close to or far away from the electronic device 200, the electronic device 200 can communicate with the electronic device 100, to provide one or more services for the user with the assistance of the electronic device 100. For example, when the user goes out with only the electronic device 200, the user can still view a message notification of a social application in a timely manner by using the electronic device 200, and reply to the message. This can improve user experience of using the electronic device 200.

The following describes a process of establishing a communication connection for transmitting data based on a modem in this application.

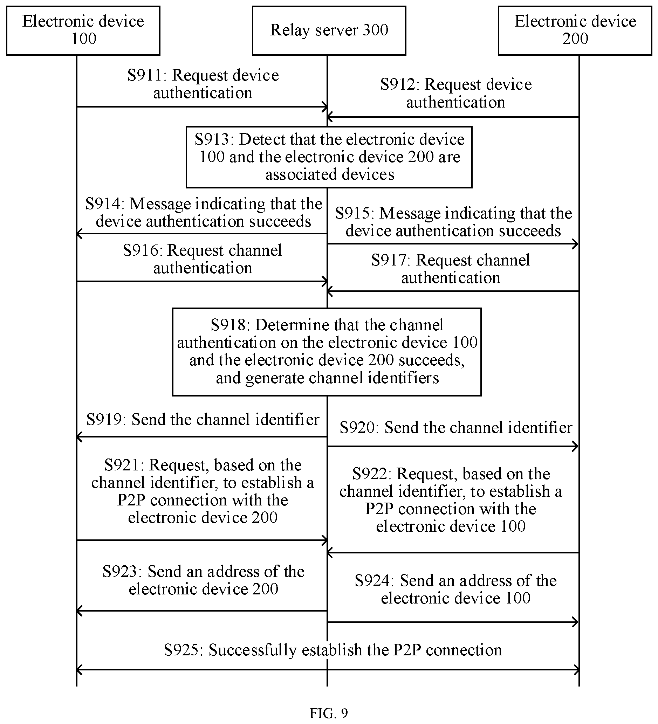

### FIG. 9 is an example flowchart of a method for establishing a communication connection for transmitting data based on a modem according to this application.

As shown in FIG. 9, the communication connection for transmitting data based on the modem may be a P2P connection. The method for establishing the connection may include three phases.

### Phase 1: device authentication (S911 to S915)

S911: An electronic device 100 requests device authentication from a relay server 300.

S912: An electronic device 200 requests device authentication from the relay server 300.

In some embodiments, when the electronic device 100 detects that a Bluetooth connection between the electronic device 100 and the electronic device 200 is disconnected (for example, no Bluetooth heartbeat packet of the electronic device 200 is received within a preset time period), the electronic device 100 may request the device authentication from the relay server 300. A device authentication request of the electronic device 100 may include device information of the electronic device 100, for example, device account information of the electronic device 100.

When the electronic device 200 detects that a Bluetooth connection between the electronic device 100 and the electronic device 200 is disconnected (for example, no Bluetooth heartbeat packet of the electronic device 100 is received within a preset time period), the electronic device 200 may request the device authentication from the relay server 300. A device authentication request of the electronic device 200 may include device information of the electronic device 200, for example, device account information of the electronic device 200.

In addition to the device account information, the device authentication requests of the electronic device 100 and the electronic device 200 may further include other information. This is not limited in embodiments of this application.

S913: The relay server 300 detects that the electronic device 100 and the electronic device 200 are associated devices.

In some embodiments, when receiving the device authentication request of the electronic device 100, the relay server 300 may store the device information of the electronic device 100. When receiving the device authentication request of the electronic device 200, the relay server 300 may store the device information of the electronic device 200. The relay server 300 may detect, based on the device information of the electronic device 100 and the electronic device 200, whether the electronic device 100 and the electronic device 200 are associated devices. For example, when detecting that device accounts of the electronic device 100 and the electronic device 200 are the same, the relay server 300 may determine that the electronic device 100 and the electronic device 200 are associated devices.

When the electronic device 100 and the electronic device 200 are associated devices, the relay server 300 may generate a device identifier of the electronic device 100 and a device identifier of the electronic device 200. The device identifier of the electronic device 100 may be used by the relay server 300 to identify the electronic device 100. The device identifier of the electronic device 100 may be a first device identifier. The device identifier of the electronic device 200 may be used by the relay server 300 to identify the electronic device 200. The device identifier of the electronic device 200 may be a second device identifier.

S914: The relay server 300 sends, to the electronic device 100, a message indicating that the device authentication succeeds.

S915: The relay server 300 sends, to the electronic device 200, a message indicating that the device authentication succeeds.

When the electronic device 100 and the electronic device 200 are associated devices, the relay server 300 may separately send, to the electronic device 100 and the electronic device 200, the messages indicating that the device authentication succeeds. The message sent by the relay server 300 to the electronic device 100 and indicating that the device authentication succeeds may include the device identifier (for example, the first device identifier) of the electronic device 100. The message sent by the relay server 300 to the electronic device 200 and indicating that the device authentication succeeds may include the device identifier (for example, the second device identifier) of the electronic device 200.

In some embodiments, the device authentication request sent by the electronic device 100 in step S911 may include one or more pieces of device information of the electronic device 200. In this way, based on the device authentication request of the electronic device 100, the relay server 300 may search for the electronic device 200, to detect whether the electronic device 200 is an associated device of the electronic device 100. Optionally, the device authentication request sent by the electronic device 200 in step S912 may include one or more pieces of device information of the electronic device 100. In this way, based on the device authentication request of the electronic device 200, the relay server 300 may search for the electronic device 100, to detect whether the electronic device 100 is an associated device of the electronic device 200.

It can be learned that the device authentication may be used to verify whether the electronic device 100 and the electronic device 200 have an association relationship. If the electronic device 100 and the electronic device 200 have an association relationship (that is, the electronic device 100 and the electronic device 200 are associated devices), the device authentication on both the electronic device 100 and the electronic device 200 succeeds. The device authentication can ensure that a peer device is an expected device when the two devices establish a communication connection for transmitting data based on a modem. In this way, security of application data transmission can be improved.

### Phase 2: channel authentication (S916 to S920)

S916: The electronic device 100 requests channel authentication from the relay server 300.

After the electronic device 100 receives the message indicating that the device authentication succeeds, the electronic device 100 may request the channel authentication from the relay server 300. In some embodiments, a channel authentication request of the electronic device 100 may include the device identifier of the electronic device 100.

If the electronic device 100 has a capability of switching between Bluetooth-based data transmission and modem-based data transmission, the electronic device 100 may send the channel authentication request to the relay server 300. Specifically, the channel authentication request may be initiated by a Bluetooth service or a wearable device management service in the electronic device 100. Refer to FIG. 5 or FIG. 6 above. If the Bluetooth service or the wearable device management service in the electronic device 100 not only can invoke a Bluetooth chip, but also can invoke a modem through a network management interface, the Bluetooth service or the wearable device management service in the electronic device 100 may invoke the modem through the network management interface, to send the channel authentication request to the relay server 300.

Therefore, the relay server 300 may verify, based on whether the electronic device 100 sends the channel authentication request, whether the electronic device 100 has the capability of switching between Bluetooth-based data transmission and modem-based data transmission.

S917: The electronic device 200 requests channel authentication from the relay server 300.

After the electronic device 200 receives the message indicating that the device authentication succeeds, the electronic device 200 may request the channel authentication from the relay server 300. In some embodiments, a channel authentication request of the electronic device 200 may include the device identifier of the electronic device 200.

If the electronic device 200 has a capability of switching between Bluetooth-based data transmission and modem-based data transmission, the electronic device 200 may send the channel authentication request to the relay server 300. Specifically, the channel authentication request may be initiated by a Bluetooth service or a wearable device management service in the electronic device 200. Refer to FIG. 5 or FIG. 6 above. If the Bluetooth service or the wearable device management service in the electronic device 200 not only can invoke a Bluetooth chip, but also can invoke a modem through a network management interface, the Bluetooth service or the wearable device management service in the electronic device 200 may invoke the modem through the network management interface, to send the channel authentication request to the relay server 300.

Therefore, the relay server 300 may verify, based on whether the electronic device 200 sends the channel authentication request, whether the electronic device 200 has the capability of switching between Bluetooth-based data transmission and modem-based data transmission.

S918: The relay server 300 determines that the channel authentication on the electronic device 100 and the electronic device 200 succeeds, and generates channel identifiers.

It can be learned from steps S916 and S917 that, that the electronic device 100 sends the channel authentication request may indicate that the electronic device 100 has the capability of switching between Bluetooth-based data transmission and modem-based data transmission. That the electronic device 200 sends the channel authentication request may indicate that the electronic device 200 has the capability of switching between Bluetooth-based data transmission and modem-based data transmission.

Therefore, when receiving the channel authentication request of the electronic device 100, the relay server 300 may determine that the channel authentication on the electronic device 100 succeeds, and then generate the channel identifier corresponding to the electronic device 100, for example, a first channel identifier. In some embodiments, the first channel identifier may be used by the electronic device 100 to establish a signaling link, for example, a first signaling link, with the relay server 300. The first signaling link may be used for signaling transmission between the electronic device 100 and the relay server 300. Signaling may refer to a control instruction in a communication system, and is a control signal required in the communication system to ensure normal communication, in addition to transmitting user information (such as device information and application data), so that a communication network works in an orderly manner. The signaling is different from the user information. The user information is directly transmitted from a transmitter to a receiver through the communication network. The signaling usually needs to be transmitted between different nodes (such as base stations, mobile stations, and mobile control switching centers) in the communication network. The nodes perform analysis and processing and form a series of operations and control through interaction. The signaling can be used to ensure effective and reliable transmission of the user information. In other words, the signaling may be considered as a control system of the entire communication network.

When receiving the channel authentication request of the electronic device 200, the relay server 300 may determine that the channel authentication on the electronic device 200 succeeds, and then generate the channel identifier corresponding to the electronic device 200, for example, a second channel identifier. In some embodiments, the second channel identifier may be used by the electronic device 200 to establish a signaling link, for example, a second signaling link, with the relay server 300. The second signaling link may be used for signaling transmission between the electronic device 200 and the relay server 300.

S919: The relay server 300 sends the channel identifier to the electronic device 100.

The channel identifier sent by the relay server 300 to the electronic device 100 may be the first channel identifier. The electronic device 100 may establish the first signaling link with the relay server 300 based on the first channel identifier. Signaling transmitted by the electronic device 100 and the relay server 300 through the first signaling link may include an instruction that the electronic device 100 requests to establish, with the electronic device 200, a communication connection for transmitting data based on a modem. In other words, the first signaling link may be used by the electronic device 100 and the electronic device 200 to establish the communication connection for transmitting data based on the modem.

S920: The relay server 300 sends the channel identifier to the electronic device 200.

The channel identifier sent by the relay server 300 to the electronic device 100 may be the second channel identifier. The electronic device 100 may establish the second signaling link with the relay server 300 based on the second channel identifier. Signaling transmitted by the electronic device 200 and the relay server 300 through the second signaling link may include an instruction that the electronic device 200 requests to establish, with the electronic device 100, a communication connection for transmitting data based on a modem. In other words, the second signaling link may be used by the electronic device 100 and the electronic device 200 to establish the communication connection for transmitting data based on the modem.

The first channel identifier is different from the second channel identifier. The first signaling link is also different from the second signaling link. Specific content of the first channel identifier and the second channel identifier is not limited in embodiments of this application.

It can be learned that the channel authentication may be used to verify whether an electronic device (for example, the electronic device 100 or the electronic device 200) has the capability of switching between Bluetooth-based data transmission and modem-based data transmission. The capability may be referred to as a first capability. Refer to FIG. 5 or FIG. 6. That the electronic device 100 has the first capability (that is, the channel authentication on the electronic device 100 succeeds) may indicate that there is a channel between the Bluetooth service or the wearable device management service in the electronic device 100 and the Bluetooth chip, and there is also a channel between the Bluetooth service or the wearable device management service and the modem. Similarly, that the electronic device 200 has the first capability (that is, the channel authentication on the electronic device 200 succeeds) may indicate that there is a channel between the Bluetooth service or the wearable device management service in the electronic device 200 and the Bluetooth chip, and there is also a channel between the Bluetooth service or the wearable device management service and the modem.

The channel authentication may be used to determine whether two devices have a capability of switching a data transmission manner (that is, switching from originally transmitting data via a Bluetooth connection to transmitting the data through the modem to a target device, or switching from originally transmitting data through the modem to transmitting the data via a Bluetooth connection to a target device). This can reduce a case in which an electronic device requests to establish a connection with an electronic device that does not have a data transmission manner switching capability, and reduce a waste of resources such as compute resources and storage resources of the electronic device.

In some embodiments, the device authentication may be used only to determine an identity of an electronic device. For example, when receiving the device authentication request of the electronic device 100, the relay server 300 may store the device information of the electronic device 100, generate the device identifier (for example, the first device identifier) of the electronic device 100, and perform step S914. The device authentication request of the electronic device 100 may enable the relay server 300 to know existence of the electronic device 100 and the device information of the electronic device 100. When receiving the device authentication request of the electronic device 200, the relay server 300 may store the device information of the electronic device 200, generate the device identifier (for example, the second device identifier) of the electronic device 200, and perform step S915. The device authentication request of the electronic device 200 may enable the relay server 300 to know existence of the electronic device 200 and the device information of the electronic device 200. The relay server 300 may verify an association relationship between electronic devices stored in the relay server 300, to determine electronic devices having an association relationship. In other words, step S913 may be performed after step S915.

When determining that the electronic device 100 and the electronic device 200 are associated devices, and receiving the channel authentication requests from the electronic device 100 and the electronic device 200, the relay server 300 may determine that the channel authentication on the electronic device 100 and the electronic device 200 succeeds, and then perform steps S919 and S920.

The device authentication may also be referred to as a name like first-level authentication. The channel authentication may also be referred to as a name like second-level authentication.

### Phase 3: address exchange (S921 to S925)

S921: The electronic device 100 sends, to the relay server 300 based on the channel identifier, a message for requesting to establish a P2P connection with the electronic device 200.

S922: The electronic device 200 sends, to the relay server 300 based on the channel identifier, a message for requesting to establish a P2P connection with the electronic device 100.

After both the device authentication and the channel authentication on the electronic device 100 and the electronic device 200 succeed, the electronic device 100 and the electronic device 200 may establish the P2P connection with the assistance of the relay server 300.

That the electronic device 100 sends, to the relay server 300 based on the channel identifier (for example, the first channel identifier), the message for requesting to establish the P2P connection with the electronic device 200 may be specifically that the electronic device 100 sends, to the relay server 300 through the signaling link (for example, the first signaling link) between the electronic device 100 and the relay server 300, the message for requesting to establish the P2P connection with the electronic device 200.

That the electronic device 200 sends, to the relay server 300 based on the channel identifier (for example, the second channel identifier), the message for requesting to establish the P2P connection with the electronic device 100 may be specifically that the electronic device 200 sends, to the relay server 300 through the signaling link (for example, the second signaling link) between the electronic device 200 and the relay server 300, the message for requesting to establish the P2P connection with the electronic device 100.

If a network environment in which the electronic device 100 is located supports the P2P connection, the electronic device 100 may perform step S921. If a network environment in which the electronic device 100 is located does not support the P2P connection, the electronic device 100 does not perform step S921. The relay server 300 cannot receive the request of the electronic device 100 for requesting to establish the P2P connection with the electronic device 200. Similarly, if a network environment in which the electronic device 200 is located supports the P2P connection, the electronic device 200 may perform step S922. If a network environment in which the electronic device 200 is located does not support the P2P connection, the electronic device 200 does not perform step S922. The relay server 300 cannot receive the request of the electronic device 200 for requesting to establish the P2P connection with the electronic device 100.

S923: The relay server 300 sends an address of the electronic device 200 to the electronic device 100.

S924: The relay server 300 sends an address of the electronic device 100 to the electronic device 200.

The relay server 300 may obtain the addresses of the electronic device 100 and the electronic device 200. In some embodiments, the address of the electronic device 100 may include an external network IP address of the electronic device 100. The address of the electronic device 200 may include an external network IP address of the electronic device 200.

The relay server 300 may send the address of the electronic device 200 to the electronic device 100 in response to the message of the electronic device 100 for requesting to establish the P2P connection with the electronic device 200. The relay server 300 may send the address of the electronic device 100 to the electronic device 200 in response to the message of the electronic device 200 for requesting to establish the P2P connection with the electronic device 100.

S925: The electronic device 100 and the electronic device 200 successfully establish the P2P connection.

When the electronic device 100 receives the address of the electronic device 200, and the electronic device 200 receives the address of the electronic device 100, the electronic device 100 and the electronic device 200 can successfully establish the P2P connection. The electronic device 100 may traverse a NAT gateway of the electronic device 200 based on the address of the electronic device 200, and directly send data to the electronic device 200. The electronic device 200 may traverse a NAT gateway of the electronic device 100 based on the address of the electronic device 100, and directly send data to the electronic device 100.

It can be learned from the method shown in FIG. 9 that, when the communication connection for transmitting data based on the modem is established, the electronic device 100 and the electronic device 200 may first perform security authentication (for example, device authentication and channel authentication) through the relay server 300. After the security authentication succeeds, the electronic device 100 and the electronic device 200 may perform specific steps (such as steps S921 and S922 shown in FIG. 9) of communication connection establishment through the relay server 300. The security authentication can ensure that the two devices that establish the communication connection for transmitting data based on the modem are associated devices, and avoid that the electronic device 100 or the electronic device 200 sends application data to a non-associated device, thereby improving security of application data transmission. In addition, the security authentication can verify whether the two electronic devices have a capability of switching, after a Bluetooth connection is disconnected, from originally transmitting data via the Bluetooth connection to transmitting the data through the modem. This can reduce a case in which an electronic device requests to establish a connection with an electronic device that does not have a data transmission manner switching capability, and reduce a waste of resources such as compute resources and storage resources of the electronic device.

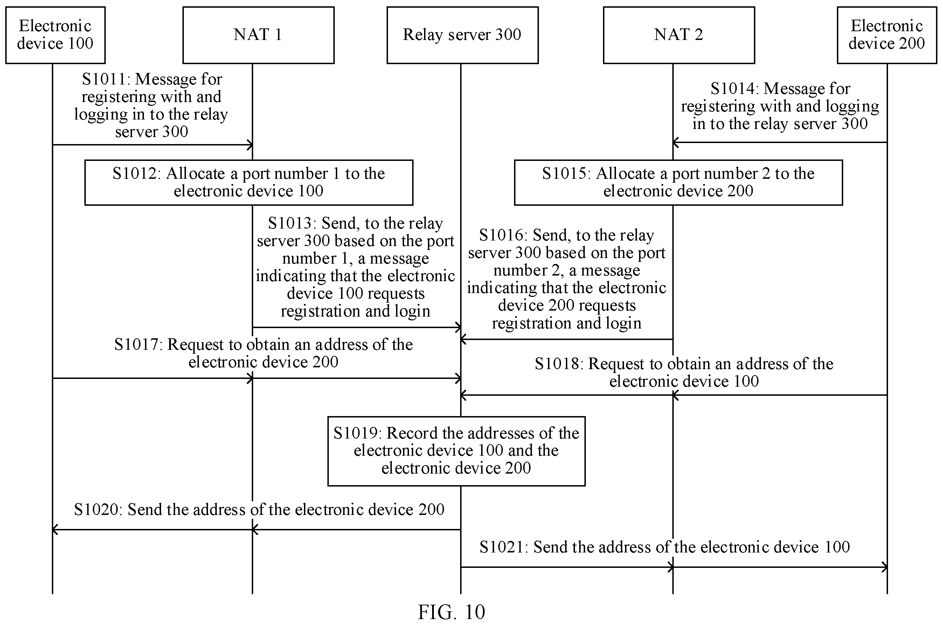

### FIG. 10 is an example flowchart of a P2P connection establishment method according to this application.

As shown in FIG. 10, a NAT 1 may be a device that can implement a NAT technology, for example, a NAT gateway of an electronic device 100. A NAT 2 may be a device that can implement a NAT technology, for example, a NAT gateway of an electronic device 200. The NAT technology can be used to connect an external network and an internal network to implement IP reuse. The external network may also be referred to as a public network. The internal network may also be referred to as a private network. One NAT gateway may serve a plurality of electronic devices. One NAT gateway may allocate different port numbers to a plurality of electronic devices served by the NAT gateway, to determine, based on a port, a specific electronic device to which data from the public network needs to be distributed.

S1011: The electronic device 100 sends, to the NAT 1, a message for registering with and logging in to a relay server 300.

Before requesting to establish a P2P connection with the electronic device 200, the electronic device 100 may first register with and log in to the relay server 300, to announce an identity of the electronic device 100 to the relay server 300. Because the electronic device 100 is located in an internal network in which the NAT 1 is located, the electronic device 100 may send, to the NAT 1, the message for registering with and logging in to the relay server 300. For example, an internal network IP address of the electronic device 100 is an IP address 1. In a data packet corresponding to the registration and login message of the electronic device 100, a source address may be the IP address 1.

S1012: The NAT 1 allocates a port number 1 to the electronic device 100.

The port number 1 may be allocated to the electronic device 100 after the NAT 1 receives the message for registering with and logging in to the relay server 300, or may be allocated to the electronic device 100 before the NAT 1 receives the message for registering with and logging in to the relay server 300. Time at which the NAT 1 allocates the port number 1 to the electronic device 100 is not limited in embodiments of this application. The port number 1 may be a random port number.

S1013: The NAT 1 sends, to the relay server 300 based on the port number 1, a message indicating that the electronic device 100 requests registration and login.

When receiving the message for registering with and logging in to the relay server 300, the NAT 1 may translate the source address in the data packet corresponding to the registration and login message. For example, an external network IP address of the NAT 1 is an IP address 2. The NAT 1 may translate the source address in the data packet from the IP address 1 into "IP address 2: port number 1". "IP address 2: port number 1" may be an external network IP address of the electronic device 100.

The NAT 1 may send a registration and login message obtained by translating the source address to the relay server 300. In this way, the relay server 300 may determine that the registration and login message is sent from "IP address 2: port number 1" to the relay server 300. The relay server 300 may store "IP address 2: port number 1".

In some embodiments, steps S1011 to S1013 may be performed before step S911 shown in FIG. 9.

S1014: The electronic device 200 sends, to the NAT 2, a message for registering with and logging in to the relay server 300.

Similarly, before requesting to establish a P2P connection with the electronic device 100, the electronic device 200 may first register with and log in to the relay server 300, to announce an identity of the electronic device 200 to the relay server 300. Because the electronic device 200 is located in an internal network in which the NAT 2 is located, the electronic device 200 may send, to the NAT 2, the message for registering with and logging in to the relay server 300. For example, an internal network IP address of the electronic device 200 is an IP address 3. In a data packet corresponding to the registration and login message of the electronic device 200, a source address may be the IP address 3.

S1015: The NAT 2 allocates a port number 2 to the electronic device 200.

The port number 2 may be allocated to the electronic device 200 after the NAT 2 receives the message for registering with and logging in to the relay server 300, or may be allocated to the electronic device 200 before the NAT 2 receives the message for registering with and logging in to the relay server 300. Time at which the NAT 2 allocates the port number 2 to the electronic device 200 is not limited in embodiments of this application. The port number 2 may be a random port number.

S1016: The NAT 2 sends, to the relay server 300 based on the port number 2, a message indicating that the electronic device 200 requests registration and login.

When receiving the message for registering with and logging in to the relay server 300, the NAT 2 may translate the source address in the data packet corresponding to the registration and login message. For example, an external network IP address of the NAT 2 is an IP address 4. The NAT 2 may translate the source address in the data packet from the IP address 3 into "IP address 4: port number 2". "IP address 4: port number 2" may be an external network IP address of the electronic device 200.

The NAT 2 may send a registration and login message obtained by translating the source address to the relay server 300. In this way, the relay server 300 may determine that the registration and login message is sent from "IP address 4: port number 2" to the relay server 300. The relay server 300 may store "IP address 4: port number 2".

In some embodiments, steps S1014 to S1016 may be performed before step S912 shown in FIG. 9.

S1017: The electronic device 100 requests, through the NAT 1, the relay server 300 for obtaining an address of the electronic device 200.

The electronic device 100 may send, to the NAT 1, a request for obtaining the address of the electronic device 200. In a data packet corresponding to the request, a source address is the IP address 1. When receiving the request, the NAT 1 may translate the source address in the data packet corresponding to the request, to translate the source address from the IP address 1 into "IP address 2: port number 1". The NAT 1 may send a request obtained by translating the source address to the relay server 300. The request for obtaining the address of the electronic device 200 may further include the internal network IP address (for example, the IP address 1) of the electronic device 100 and one or more pieces of device information of the electronic device 200. In this way, the relay server 300 may determine that a device corresponding to "IP address 2: port number 1" requests to obtain the address of the electronic device 200.

In some embodiments, step S1017 may be a specific implementation of step S921 shown in FIG. 9. The first signaling link between the electronic device 100 and the relay server 300 in step S921 may include a signaling link between the electronic device 100 and the NAT 1 and a signaling link between the NAT 1 and the relay server 300. The request for obtaining the address of the electronic device 200 may be transmitted to the relay server 300 through the first signaling link.

S1018: The electronic device 200 requests, through the NAT 2, the relay server 300 for obtaining an address of the electronic device 100.

The electronic device 200 may send, to the NAT 2, a request for obtaining the address of the electronic device 100. In a data packet corresponding to the request, a source address is the IP address 3. When receiving the request, the NAT 2 may translate the source address in the data packet corresponding to the request, to translate the source address from the IP address 3 into "IP address 4: port number 2". The NAT 2 may send a request obtained by translating the source address to the relay server 300. The request for obtaining the address of the electronic device 100 may further include the internal network address (for example, the IP address 3) of the electronic device 200 and one or more pieces of device information of the electronic device 100. In this way, the relay server 300 may determine that a device corresponding to "IP address 4: port number 2" requests to obtain the address of the electronic device 100.

In some embodiments, step S1018 may be a specific implementation of step S922 shown in FIG. 9. The second signaling link between the electronic device 200 and the relay server 300 in step S922 may include a signaling link between the electronic device 200 and the NAT 2 and a signaling link between the NAT 2 and the relay server 300. The request for obtaining the address of the electronic device 100 may be transmitted to the relay server 300 through the second signaling link.

S1019: The relay server 300 records the addresses of the electronic device 100 and the electronic device 200.

The relay server 300 may obtain the external network IP address and the internal network IP address of the electronic device 100 based on the request for obtaining the address of the electronic device 200 in step S1017. The relay server 300 may store the external network IP address and the internal network IP address of the electronic device 100.

The relay server 300 may obtain the external network IP address and the internal network IP address of the electronic device 200 based on the request for obtaining the address of the electronic device 100 in step S1018. The relay server 300 may store the external network IP address and the internal network IP address of the electronic device 200.

S1020: The relay server 300 sends the address of the electronic device 200 to the electronic device 100 through the NAT 1.

In response to the request for obtaining the address of the electronic device 200 in step S1017, the relay server 300 may send the address (for example, the internal network IP address and the external network IP address) of the electronic device 200 to the address "IP address 2: port number 1" (that is, the NAT 1). The NAT 1 may send the address of the electronic device 200 to the electronic device 100 based on the port number 1 in the address "IP address 2: port number 1".

S1021: The relay server 300 sends the address of the electronic device 100 to the electronic device 200 through the NAT 2.

In response to the request for obtaining the address of the electronic device 100 in step S1018, the relay server 300 may send the address (for example, the internal network IP address and the external network IP address) of the electronic device 100 to the address "IP address 4: port number 2" (that is, the NAT 2). The NAT 2 may send the address of the electronic device 100 to the electronic device 200 based on the port number 2 in the address "IP address 4: port number 2".

Then, the electronic device 100 may send data to the electronic device 200 based on the address of the electronic device 200. The electronic device 200 may send data to the electronic device 100 based on the address of the electronic device 100. If the electronic device 100 and the electronic device 200 receive the data of each other, the electronic device 100 and the electronic device 200 may remember first reply packet address information of each other, identify identities of each other, and then determine that the P2P connection is successfully established. When the P2P connection is successfully established, the electronic device 100 and the electronic device 200 may traverse NAT gateways of each other based on the addresses of each other, and send data to each other via the P2P connection.

In some embodiments, the electronic device 100 may further create a local port to detect data received by different ports. Different ports may correspond to different applications in the electronic device 100. When receiving a data packet, the electronic device 100 may send data to a destination port based on a destination port number in the data packet. An application corresponding to the destination port may obtain the data from the destination port. Similarly, the electronic device 200 may also create a local port, to detect data received by different ports, so as to transmit data to an application corresponding to the port. Time at which the electronic device 100 and the electronic device 200 create the local ports is not limited in embodiments of this application.

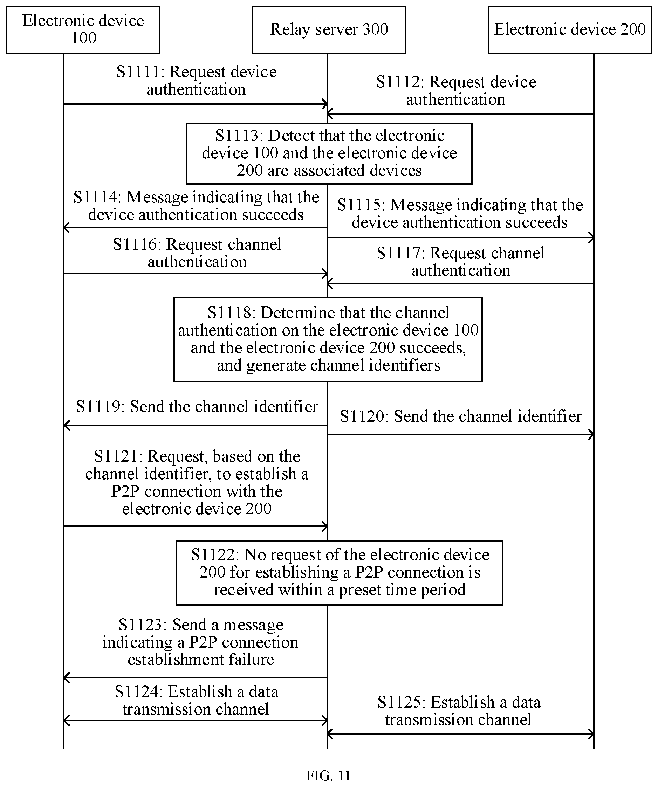

### FIG. 11 is an example flowchart of another method for establishing a communication connection for transmitting data based on a modem according to this application.

As shown in FIG. 11, the communication connection for transmitting data based on the modem may be a communication connection in which a relay server 300 serves as a data relay station. In some embodiments, when a Bluetooth connection between an electronic device 100 and an electronic device 200 is disconnected, the electronic device 100 and the electronic device 200 may first attempt to establish a P2P connection. If the P2P connection fails to be established, the electronic device 100 and the electronic device 200 may establish a communication connection in which the relay server 300 serves as a data relay station.

S1111: The electronic device 100 requests device authentication from the relay server 300.

S1112: The electronic device 200 requests device authentication from the relay server 300.

S1113: The relay server 300 detects that the electronic device 100 and the electronic device 200 are associated devices.

S1114: The relay server 300 sends, to the electronic device 100, a message indicating that the device authentication succeeds.

S1115: The relay server 300 sends, to the electronic device 200, a message indicating that the device authentication succeeds.

S1116: The electronic device 100 requests channel authentication from the relay server 300.

S1117: The electronic device 200 requests channel authentication from the relay server 300.

S1118: The relay server 300 determines that the channel authentication on the electronic device 100 and the electronic device 200 succeeds, and generates channel identifiers.

S1119: The relay server 300 sends the channel identifier to the electronic device 100.

S1120: The relay server 300 sends the channel identifier to the electronic device 200.

S1121: The electronic device 100 sends, to the relay server 300 based on the channel identifier, a message for requesting to establish a P2P connection with the electronic device 200.

For steps S1111 to S1121, refer to steps S911 to S921 shown in FIG. 9.

S1122: The relay server 300 receives, within a preset time period, no request of the electronic device 200 for establishing a P2P connection.

In some embodiments, a network environment in which the electronic device 200 is located does not support the P2P connection. For example, if a NAT 2 of the electronic device 200 does not support a P2P protocol, the electronic device 200 cannot perform step S1018 shown in FIG. 10 (that is, step S922 shown in FIG. 9). Therefore, the relay server 300 cannot receive, within the preset time period, a request of the electronic device 200 for establishing a P2P connection. The preset time period may include a time period after the relay server 300 receives the message of the electronic device 100 for requesting to establish the P2P connection with the electronic device 200. Optionally, the preset time period may alternatively include a time period before the relay server 300 receives the message of the electronic device 100 for requesting to establish the P2P connection with the electronic device 200. Duration of the preset time period is not limited in embodiments of this application.

S1123: The relay server 300 sends, to the electronic device 100, a message indicating a P2P connection establishment failure.

If the relay server 300 receives, within the preset time period, no request of the electronic device 200 for establishing a P2P connection, it may indicate that the electronic device 200 cannot establish the P2P connection currently. Therefore, the relay server 300 may send, to the electronic device 100, the message indicating the P2P connection establishment failure.

S1124: The electronic device 100 establishes a data transmission channel with the relay server 300.

When the electronic device 100 cannot establish the P2P connection with the electronic device 200, the electronic device 100 may establish the data transmission channel with the relay server 300. The data transmission channel between the electronic device 100 and the relay server 300 may be a first data transmission channel. The first data transmission channel may be used by the electronic device 100 to transmit application data with the relay server 300. In some embodiments, the first data transmission channel and the foregoing signaling link (for example, the first signaling link) between the electronic device 100 and the relay server 300 are different communication channels. Alternatively, the first data transmission channel and the first signaling link may share a same communication channel. A method for establishing the first data transmission channel is not limited in embodiments of this application.

In some embodiments, if the first data transmission channel and the first signaling link are different communication channels, an instruction for establishing the first data transmission channel between the electronic device 100 and the relay server 300 may be transmitted through the first signaling link.

S1125: The electronic device 200 establishes a data transmission channel with the relay server 300.

Because the network environment in which the electronic device 200 is located does not support the P2P connection, the electronic device 200 may establish the data transmission channel with the relay server 300. The data transmission channel between the electronic device 200 and the relay server 300 may be a second data transmission channel. The second data transmission channel may be used by the electronic device 200 to transmit application data with the relay server 300. In some embodiments, the second data transmission channel and the foregoing signaling link (for example, the second signaling link) between the electronic device 200 and the relay server 300 are different communication channels. Alternatively, the second data transmission channel and the second signaling link may share a same communication channel. A method for establishing the second data transmission channel is not limited in embodiments of this application.

In some embodiments, if the second data transmission channel and the second signaling link are unpassable communication channels, an instruction for establishing the second data transmission channel between the electronic device 200 and the relay server 300 may be transmitted through the second signaling link.

Step S1125 may be performed after step S1120. In some embodiments, step S1122 is optional. If the relay server 300 receives a message of the electronic device 200 for requesting to establish a data transmission channel, the relay server 300 may perform step S1123, to send, to the electronic device 100, the message indicating the P2P connection establishment failure.

When the electronic device 100 establishes the first data transmission channel with the relay server 300, and the electronic device 200 establishes the second data transmission channel with the relay server 300, the electronic device 100 and the electronic device 200 may be connected through the first data transmission channel and the second data transmission channel by using the relay server 300 as a data relay station.

In some embodiments, the electronic device 100 may send, to the relay server 300 through the first data transmission channel, data to be sent to the electronic device 200. The data sent to the relay server 300 may include one or more pieces of device information of the electronic device 200, so that the relay server 300 determines that the data is sent to the electronic device 200. For example, the device information of the electronic device 200 in the data may include a device identifier of the electronic device 200. The relay server 300 may send the data to the electronic device 200 through the second data transmission channel. The relay server 300 may perform processing such as decoding and identification on the data sent by the electronic device 100, to identify the device information of the electronic device 200 included in the data. Then, the relay server 300 may perform processing such as encoding on the data, and send encoded data to the electronic device 200.

Similarly, the electronic device 200 may send, to the relay server 300 through the second data transmission channel, data to be sent to the electronic device 100. The data sent to the relay server 300 may include one or more pieces of device information of the electronic device 100, so that the relay server 300 determines that the data is sent to the electronic device 100. For example, the device information of the electronic device 100 in the data may include a device identifier of the electronic device 100. The relay server 300 may send the data to the electronic device 100 through the first data transmission channel.

In some embodiments, when a Bluetooth connection between the electronic device 100 and the electronic device 200 is disconnected, the electronic device 100 and the electronic device 200 may directly establish a communication connection in which the relay server 300 serves as a data relay station.

Specifically, the electronic device 100 and the electronic device 200 may request device authentication from the relay server 300. When the device authentication on both the electronic device 100 and the electronic device 200 succeeds, the electronic device 100 and the electronic device 200 may request channel authentication from the relay server 300. When the channel authentication on both the electronic device 100 and the electronic device 200 succeeds, the electronic device 100 may establish a data transmission channel with the relay server 300, and the electronic device 200 may also establish a data transmission channel with the relay server 300. For specific methods for performing device authentication, performing channel authentication, and establishing a data transmission channel, refer to the descriptions in the foregoing embodiments. Details are not described herein.

In some embodiments, when a P2P connection is established between the electronic device 100 and the electronic device 200, or when a data transmission channel is established between the electronic device 100 and the relay server 300 and a data transmission channel is established between the electronic device 200 and the relay server 300, the electronic device 100 and the electronic device 200 can still enable Bluetooth, detect nearby Bluetooth devices, and send Bluetooth advertising to announce existence of the electronic device 100 and the electronic device 200 to the nearby Bluetooth devices. When the electronic device 100 detects the Bluetooth advertising of the electronic device 200, the electronic device 100 may establish a Bluetooth connection with the electronic device 200. Alternatively, when the electronic device 200 detects the Bluetooth advertising of the electronic device 100, the electronic device 200 may establish a Bluetooth connection with the electronic device 100. Optionally, when the electronic device 100 and the electronic device 200 establish the Bluetooth connection, the electronic device 100 and the electronic device 200 may disconnect the P2P connection, or the electronic device 100 disconnects the data transmission channel with the relay server 300 and the electronic device 200 disconnects the data transmission channel with the relay server 300.

In other words, when the Bluetooth connection between the electronic device 100 and the electronic device 200 is disconnected, the electronic device 100 and the electronic device 200 may establish, with the assistance of the relay server 300, a communication connection for transmitting data based on a modem. In this way, when a distance between the electronic device 100 and the electronic device 200 exceeds a Bluetooth transmission distance range, the electronic device 100 and the electronic device 200 may transmit data through the communication connection for transmission based on the modem. When the electronic device 100 and the electronic device 200 approach each other again, the electronic device 100 and the electronic device 200 may resume the Bluetooth connection, switch a data transmission manner, and transmit data to each other via the Bluetooth connection.

It should be noted that, if no contradiction or conflict occurs, any features or any parts of any features in any embodiment of this application may be combined, and a combined technical solution also falls within the scope of embodiments of this application.

The foregoing embodiments are merely used to describe the technical solutions of this application, but not limit the technical solutions of this application. Although this application is described in detail with reference to the foregoing embodiments, persons of ordinary skill in the art should understand that they may still modify the technical solutions described in the foregoing embodiments, or perform equivalent replacement on some technical features. However, these modifications or replacements do not make the essence of the corresponding technical solutions depart from the scope of the technical solutions in embodiments of this application.

## Claims

1. A device communication method, wherein the method is applied to a communication system, the communication system comprises a first device and a second device, a Bluetooth connection is established between the first device and the second device, and the method comprises:
when the Bluetooth connection is disconnected, requesting, by the first device, device authentication from a first server, and requesting, by the second device, the device authentication from the first server, wherein the device authentication is used to verify whether the first device and the second device have an association relationship;
when the device authentication succeeds, requesting, by the first device, channel authentication from the first server, and requesting, by the second device, the channel authentication from the first server, wherein the channel authentication is used to verify whether the first device and the second device have a capability of switching between Bluetooth-based data transmission and modem-based data transmission;
when the channel authentication succeeds, establishing, by the first device and the second device, a first connection, wherein the first connection is a communication connection for transmitting data based on a modem; and
when the first connection is successfully established, transmitting, by the first device and the second device, data via the first connection.

2. The method according to claim 1, wherein the first connection is a P2P connection.

3. The method according to claim 2, wherein the method further comprises:
when the first connection fails to be established, establishing, by the first device and the second device, a second connection through the first server, wherein the second connection comprises a data transmission channel between the first device and the first server and a data transmission channel between the second device and the first server; and
transmitting, by the first device and the second device, data via the second connection.

4. The method according to claim 1, wherein the establishing, by the first device and the second device, the first connection specifically comprises:
establishing, by the first device, a data transmission channel with the first server, and establishing, by the second device, a data transmission channel with the first server, wherein the first connection comprises the data transmission channel between the first device and the first server and the data transmission channel between the second device and the first server.

5. The method according to any one of claims 1 to 4, wherein after the Bluetooth connection is disconnected, the method further comprises:
when the first device detects Bluetooth advertising of the second device, and/or the second device detects Bluetooth advertising of the first device, resuming, by the first device and the second device, the Bluetooth connection.

6. The method according to any one of claims 3 to 5, wherein the first device and the second device each comprise a first application, and the method further comprises:
when a Bluetooth connection is established between the first device and the second device, sending, by the first device, first data of the first application to the second device via the Bluetooth connection;
when a P2P connection is established between the first device and the second device, sending, by the first device, the first data to the second device via the P2P connection; or
when a data transmission channel is established between the first device and the first server, and a data transmission channel is established between the second device and the first server, sending, by the first device, the first data to the first server and indicating the first server to send the first data to the second device, and receiving, by the second device, the first data from the first server.

7. The method according to claim 6, wherein the first data is obtained by the first device from a second server corresponding to the first application before the first device sends the first data to the second device.

8. The method according to any one of claims 3 to 7, wherein the first device and the second device each comprise the first application, and the method further comprises:
when a Bluetooth connection is established between the first device and the second device, sending, by the second device, second data of the first application to the first device via the Bluetooth connection;
when a P2P connection is established between the first device and the second device, sending, by the second device, the second data to the first device via the P2P connection; or
when a data transmission channel is established between the first device and the first server, and a data transmission channel is established between the second device and the first server, sending, by the second device, the second data to the first server and indicating the first server to send the second data to the first device, and receiving, by the first device, the second data from the first server.

9. The method according to claim 8, wherein the second data is data determined by the second device based on a user input.

10. The method according to claim 8 or 9, wherein after the receiving, by the first device, the second data, the method further comprises:
sending, by the first device, the second data to the second server corresponding to the first application.

11. The method according to any one of claims 1 to 10, wherein the method further comprises:
when the device authentication succeeds, receiving, by the first device, a first device identifier from the first server, and receiving, by the second device, a second device identifier from the first server, wherein the first device identifier is used to identify the first device, and the second device identifier is used to identify the second device, wherein
a message used by the first device to request the channel authentication from the first server comprises the first device identifier, and a message used by the second device to request the channel authentication from the first server comprises the second device identifier.

12. The method according to any one of claims 1 to 11, wherein the method further comprises:
when the channel authentication succeeds, receiving, by the first device, a first channel identifier from the first server and establishing a first signaling link with the first server, and receiving, by the second device, a second channel identifier from the first server and establishing a second signaling link with the first server, wherein the first channel identifier is used to identify the first signaling link, and the second channel identifier is used to identify the second signaling link, wherein
the first signaling link and the second signaling link are used by the first device and the second device to establish the first connection.

13. The method according to any one of claims 1 to 12, wherein the first device is a mobile phone, and the second device is a wearable device.

14. The method according to any one of claims 1 to 13, wherein the first device and the second device each comprise a first service, and the first service is used to invoke a Bluetooth chip or a modem to transmit data.

15. A device communication method, wherein the method is applied to a first device, a Bluetooth connection is established between the first device and a second device, and the method comprises:
when the Bluetooth connection is disconnected, requesting, by the first device, device authentication from a first server, wherein the device authentication is used to verify whether the first device and the second device have an association relationship;
when the device authentication succeeds, requesting, by the first device, channel authentication from the first server, wherein the channel authentication is used to verify whether the first device has a capability of switching between Bluetooth-based data transmission and modem-based data transmission;
when the channel authentication succeeds, establishing, by the first device, a first connection with the second device, wherein the first connection is a communication connection for transmitting data based on a modem; and
when the first connection is successfully established, transmitting, by the first device, data with the second device via the first connection.

16. The method according to claim 15, wherein the first connection is a P2P connection.

17. The method according to claim 16, wherein the method further comprises:
when the first connection fails to be established, establishing, by the first device, a second connection with the second device through the first server, wherein the second connection comprises a data transmission channel between the first device and the first server and a data transmission channel between the second device and the first server; and
transmitting, by the first device, data with the second device via the second connection.

18. The method according to claim 15, wherein the establishing, by the first device, the first connection with the second device specifically comprises:
establishing, by the first device, the first connection with the second device through the first server, wherein the first connection comprises a data transmission channel between the first device and the first server and a data transmission channel between the second device and the first server.

19. The method according to any one of claims 15 to 18, wherein after the Bluetooth connection is disconnected, the method further comprises:
when the first device detects Bluetooth advertising of the second device, resuming, by the first device, the Bluetooth connection with the second device.

20. The method according to any one of claims 17 to 19, wherein the first device comprises a first application, and the method further comprises:
when a Bluetooth connection is established between the first device and the second device, sending, by the first device, first data of the first application to the second device via the Bluetooth connection;
when a P2P connection is established between the first device and the second device, sending, by the first device, the first data to the second device via the P2P connection; or
when a data transmission channel is established between the first device and the first server, sending, by the first device, the first data to the first server, and indicating the first server to send the first data to the second device.

21. The method according to any one of claims 17 to 20, wherein the first device comprises the first application, and the method further comprises:
when a Bluetooth connection is established between the first device and the second device, receiving, by the first device, second data of the first application from the second device via the Bluetooth connection;
when a P2P connection is established between the first device and the second device, receiving, by the first device, the second data from the second device via the P2P connection; or
when a data transmission channel is established between the first device and the first server, receiving, by the first device from the first server, the second data from the second device.

22. The method according to any one of claims 15 to 21, wherein the method further comprises:
when the device authentication succeeds, receiving, by the first device, a first device identifier from the first server, wherein the first device identifier is used to identify the first device, wherein
a message used by the first device to request the channel authentication from the first server comprises the first device identifier.

23. The method according to any one of claims 15 to 22, wherein the method further comprises:
when the channel authentication succeeds, receiving, by the first device, a first channel identifier from the first server, and establishing a first signaling link with the first server, wherein the first channel identifier is used to identify the first signaling link, wherein
the first signaling link is used by the first device to establish the first connection with the second device.

24. The method according to any one of claims 15 to 23, wherein the first device is a mobile phone.

25. The method according to claim 24, wherein the first data is obtained by the first device from a second server corresponding to the first application before the first device sends the first data to the second device.

26. The method according to claim 24 or 25, wherein the method further comprises:
sending, by the first device, the second data to the second server corresponding to the first application after receiving the second data.

27. The method according to any one of claims 15 to 23, wherein the first device is a wearable device.

28. The method according to claim 27, wherein the first data is determined by the first device based on a user input before the first device sends the first data to the second device.

29. The method according to any one of claims 15 to 28, wherein the first device comprises a first service, and the first service is used to invoke a Bluetooth chip or a modem to transmit data.

30. A device communication method, wherein the method is applied to a server, and the method comprises:
verifying, by the server in response to device authentication requests of a first device and a second device, whether the first device and the second device have an association relationship;
when the first device and the second device have an association relationship, sending, by the server to the first device and the second device, messages indicating that device authentication succeeds;
verifying, by the server in response to channel authentication requests of the first device and the second device, whether the first device and the second device have a first capability of switching between Bluetooth-based data transmission and modem-based data transmission;
when the first device and the second device have the first capability, sending, by the server to the first device and the second device, messages indicating that channel authentication succeeds; and
in response to requests of the first device and the second device for establishing a first connection, sending, by the server, a first message to the first device, and sending a second message to the second device, wherein the first message and the second message are used by the first device and the second device to establish the first connection, and the first connection is a communication connection for transmitting data based on a modem.

31. The method according to claim 30, wherein the first connection is a P2P connection, the first message comprises an IP address of the second device, and the second message comprises an IP address of the first device.

32. The method according to claim 31, wherein before the sending the first message to the first device, and sending the second message to the second device, the method further comprises:
obtaining, by the server, the IP address of the first device and the IP address of the second device.

33. The method according to claim 30, wherein the method further comprises:
establishing, by the server, a first data transmission channel with the first device; and
establishing, by the server, a second data transmission channel with the second device, wherein the first connection comprises the first data transmission channel and the second data transmission channel.

34. The method according to claim 33, wherein the method further comprises:
receiving, by the server through the first data transmission channel, first data sent by the first device, and sending the first data to the second device through the second data transmission channel.

35. The method according to claim 33 or 34, wherein the method further comprises:
receiving, by the server through the second data transmission channel, second data sent by the second device, and sending the second data to the first device through the first data transmission channel.

36. The method according to any one of claims 30 to 35, wherein the method further comprises:
verifying, by the server in response to device authentication requests of a third device and a fourth device, whether the third device and the fourth device have an association relationship;
when the third device and the fourth device have an association relationship, sending, by the server to the third device and the fourth device, messages indicating that device authentication succeeds;
verifying, by the server in response to channel authentication requests of the third device and the fourth device, whether the third device and the fourth device have the first capability;
when the third device and the fourth device have the first capability, sending, by the server to the third device and the fourth device, messages indicating that channel authentication succeeds; and
when a request of the third device for establishing a P2P connection is received, and no request of the fourth device for establishing a P2P connection is received within a first time period, sending, by the server to the third device, a message indicating a P2P connection failure, wherein the first time period comprises a time period after the server receives the request of the third device for establishing the P2P connection.

37. The method according to claim 36, wherein after the sending, by the server to the third device, the message indicating the P2P connection failure, the method further comprises:
establishing, by the server, a third data transmission channel with the third device; and
establishing, by the server, a fourth data transmission channel with the fourth device, wherein the third data transmission channel and the fourth data transmission channel are used by the third device and the fourth device to transmit data.

38. The method according to any one of claims 30 to 37, wherein the message sent by the server to the first device and indicating that the device authentication succeeds comprises a first device identifier, the message sent by the server to the second device and indicating that the device authentication succeeds comprises a second device identifier, the first device identifier is used to identify the first device, and the second device identifier is used to identify the second device; and
the channel authentication request from the first device comprises the first device identifier, and the channel authentication request from the second device comprises the second device identifier.

39. The method according to any one of claims 30 to 38, wherein the method further comprises:
when the first device and the second device have the first capability, sending, by the server, a first channel identifier to the first device, and sending a second channel identifier to the second device, wherein the first channel identifier is used to identify a first signaling link, and the second channel identifier is used to identify a second signaling link; and
establishing, by the server, the first signaling link with the first device, and establishing the second signaling link with the second device, wherein the first signaling link and the second signaling link are used by the first device and the second device to establish the first connection.

40. An electronic device, wherein the electronic device comprises a memory and a processor, the memory is configured to store a computer program, and the processor is configured to invoke the computer program, to enable the electronic device to perform the method according to any one of claims 15 to 29.

41. A computer-readable storage medium, storing instructions, wherein when the instructions are run on an electronic device, the electronic device is enabled to perform the method according to any one of claims 15 to 29.

42. A computer program product, wherein the computer program product comprises computer instructions, and when the computer instructions are run on an electronic device, the electronic device is enabled to perform the method according to any one of claims 15 to 29.

43. A server, wherein the server comprises a memory and a processor, the memory is configured to store a computer program, and the processor is configured to invoke the computer program, to enable the server to perform the method according to any one of claims 30 to 39.
